(19) Europäisches Patentamt
European Patent Office
Office européen des brevets

(11) **EP 2 365 890 B1**

(12) **EUROPÄISCHE PATENTSCHRIFT**

(45) Veröffentlichungstag und Bekanntmachung des Hinweises auf die Patenterteilung:
**22.03.2017 Patentblatt 2017/12**

(21) Anmeldenummer: **09760110.8**

(22) Anmeldetag: **20.11.2009**

(51) Int Cl.:
*B23K 26/04* (2014.01)    *B23K 26/03* (2006.01)
*B23K 26/02* (2014.01)

(86) Internationale Anmeldenummer:
**PCT/EP2009/008294**

(87) Internationale Veröffentlichungsnummer:
**WO 2010/057662 (27.05.2010 Gazette 2010/21)**

(54) **VERFAHREN UND VORRICHTUNG ZUR ÜBERWACHUNG EINES AN EINEM WERKSTÜCK DURCHZUFÜHRENDEN LASERBEARBEITUNGSVORGANGS SOWIE LASERBEARBEITUNGSKOPF MIT EINER DERARTIGEN VORRICHTUNG**

METHOD AND DEVICE FOR MONITORING A LASER MACHINING OPERATION TO BE PERFORMED ON A WORKPIECE AND LASER MACHINING HEAD HAVING SUCH A DEVICE

PROCÉDÉ ET DISPOSITIF DE SURVEILLANCE D'UN PROCESSUS D'USINAGE AU LASER EXÉCUTÉ SUR UNE PIÈCE, AINSI QUE TÊTE D'USINAGE AU LASER ÉQUIPÉE D'UN TEL DISPOSITIF

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **21.11.2008 DE 102008058422**
**20.07.2009 DE 102009033881**
**07.08.2009 EP 09010230**
**04.09.2009 EP 09011375**

(43) Veröffentlichungstag der Anmeldung:
**21.09.2011 Patentblatt 2011/38**

(73) Patentinhaber:
• **Precitec KG**
**76571 Gaggenau-Bad Rotenfels (DE)**
• **Precitec ITM GmbH**
**65760 Eschborn (DE)**

(72) Erfinder: **STORK genannt WERSBORG, Ingo**
**80799 München (DE)**

(74) Vertreter: **Ter Meer Steinmeister & Partner**
**Patentanwälte mbB**
**Nymphenburger Straße 4**
**80335 München (DE)**

(56) Entgegenhaltungen:
**EP-A2- 1 415 755       WO-A2-01/39919**
**DE-A1- 10 103 255     US-A- 5 517 420**

• **FARSON D F ET AL: "INTELLIGENT LASER WELDING CONTROL" PROCEEDINGS OF LASER MATERIALS PROCESSING CONFERENCE ICALEO.PROCEEDINGS OF INTERNATIONAL CONGRESS ON THE APPLICATIONS OF LASERS AND ELECTRO-OPTICS, XX, XX, Bd. 1722, 1. Januar 1991 (1991-01-01), Seiten 104-112, XP000490956**

**Beschreibung**

Die Erfindung betrifft ein Verfahren und eine Vorrichtung zur Überwachung eines an einem Werkstück durchzuführenden Laserbearbeitungsvorgangs sowie einen Laserbearbeitungskopf mit einer derartigen Vorrichtung.

In der Lasermaterialbearbeitung werden Werkstücke mittels fokussierter Laserstrahlung geschnitten oder gefügt, wobei sowohl bei einem Laserschneidvorgang als auch bei einem Laserschweißvorgang Prozessüberwachungssysteme und Sensoren eingesetzt werden. Für die Überwachung des Schweiß- oder Schneidprozesses werden beispielsweise Sensoren zur Erfassung der aus einer durch den Arbeitsfokus bestimmten Arbeits- oder Wechselwirkungszone kommenden Strahlung eingesetzt. Hierbei sind standardmäßig Strahlungs-Sensoren zur Beobachtung eines sich über der Wechselwirkungszone bildenden Plasmas und ein Rückreflexsensor vorgesehen, der die Rückstrahlung des Lasers aus der Wechselwirkungszone zwischen Laserstrahl und einem zu bearbeitenden Werkstück erfasst. Ferner werden zur Überwachung des Laserbearbeitungsvorgangs Temperaturfühler oder Infrarotsensoren eingesetzt, durch die eine Randaufschmelzung und das Temperaturprofil bei der Bearbeitung überwacht werden können. Neben dem Einsatz von Fotodioden, welche jeweils für einen bestimmten Wellenlängenbereich sensitiv sind, wird der Laserbearbeitungsvorgang ferner durch Kameras überwacht, welche ebenfalls in vorbestimmten Wellenlängenbereichen sensitiv sein können. Aufgrund der Bildverarbeitung der durch die Kameras aufgenommenen Bilder können ebenfalls Kennwerte zur Überwachung des Laserbearbeitungsvorganges, wie beispielsweise Parameter hinsichtlich des aufgeschmolzenen Werkstückbereiches erhalten werden.

Erstes Ziel der Überwachungssysteme ist es, zunächst die Bearbeitungsqualität gemäß der Prozessvorgabe zu klassifizieren. Zweites Ziel ist es, die Bearbeitungsqualität durch eine Steuerung und Regelung der Prozesse zu verbessern. In aktuellen Industriesystemen werden die zur Prozessüberwachung eingesetzten Sensoren und Kameras dazu verwendet, mittels der erfassten Sensordaten und mittels Methoden der Bildverarbeitung und der Datenanalyse eine Klassifizierung des aktuellen Standes des Bearbeitungsprozesses durchzuführen. Hierbei werden die eingesetzten Verfahren auf die Bearbeitungsprozesse individuell eingestellt. Bei einer Intensitätsabweichung der aufgezeichneten Sensordaten wird der aktuelle Bearbeitungsprozess als ungenügend klassifiziert, wobei entsprechende Regelungsmechanismen eingesetzt werden, um diesen Zustand zu beheben. Hierbei bezieht sich die Regelung der Prozessparameter hinsichtlich der aufgezeichneten Sensordaten jedoch nur auf die jeweiligen Messdaten der entsprechenden Sensoren.

Die EP 1 415 755 A2 beschreibt eine Laserschweißüberwachungsvorrichtung. Hierbei umfasst die Überwachungsvorrichtung zwei Photodioden sowie eine CCTV-Kamera, wobei der Beobachtungsstrahlengang der Photodioden und der CCTV-Kamera koaxial über Strahlteiler in den Strahlengang eines Bearbeitungslaserstrahls mit einer Laserstrahlquelle eingekoppelt sind. Zusätzlich weist die Überwachungsvorrichtung ein Mikrofon mit einem Vorverstärker auf, wobei die aktuellen Messwerte der Photodioden und des Vorverstärkers durch eine Digitalisierungsvorrichtung digitalisiert und an eine Datenaufnahme und Datenverarbeitungseinheit geliefert werden. Eine Messwertkurve betreffend eine Schweißcharakteristik von einem der Detektoren wird gezeigt, die verschiedene Attribute oder Parameter in Abhängigkeit der Zeit zeigt. Zur Vereinfachung der Beurteilung einer solchen zeitlichen Messwertkurve wird diese auf einzelne Werte reduziert, wobei hierfür mathematische Operationen wie Maximalwertbildung, Mimimalwertbildung, Steigungen, oder Integrale gebildet werden können. Die reduzierten Einzelwerte werden dann mit entsprechenden Schweißqualitäten bei Vorliegen dieser Werte korreliert, um entsprechende Wertbereiche für die Klassifizierung eines Laserschweißvorgangs zu finden.

Die US 5 517 420 A beschreibt ein Verfahren und eine Vorrichtung zur Echtzeit-Steuerung eines Laserbearbeitungsprozesses. Hierbei weist ein Laserbearbeitungssystem einen Laser und eine Fokussieroptik auf, welche einen Arbeitslaserstrahl auf ein Werkstück fokussiert. Die Laserbearbeitungszone wird mittels einer Kamera überwacht, wobei die Videodaten der Kamera digitalisiert und durch eine Rechnereinheit verarbeitet werden. Bei dieser Verarbeitung der Videodaten wird bei jedem Einzelbild eine Schwellwert-Behandlung durchgeführt, wobei helle Pixel oberhalb eines vorbestimmten Helligkeitswerts bestimmt und gezählt werden, um einen Wert für die flächenmäßige Ausdehnung des aus dem Schweißbad und dem Plasma emittierten Lichts zu ermitteln. Es wird ein Einzelbild mit schlechter Durchdringung des Laserstrahls, ein Einzelbild mit guter Durchdringung und ein Durchbrennen des Laserstrahls dargestellt. Durch die Ermittlung der Anzahl der Pixel, die oberhalb eines vorbestimmten Helligkeitswertes liegen, wird dann mittels Fuzzy-Logik der Laserbearbeitungsvorgang klassifiziert.

Farson D F et al "Intelligent Laser Welding Control" Proceedings of Laser Materials Processing Conference ICALEO. Proceedings of International Congress on the Applications of Lasers and Electro-Optics, XX, XX, Bd. 1722, 1. Januar 1991, Seiten 104-112, XP000490956 beschreibt ein Schweißüberwachungs/-Steuerungssystem, in welchem mittels Aufnahme von Schall und Weiterverarbeitung mittels eines neuronalen Netzes unter Zuhilfenahme eines Fuzzylogik-Steueralgorithmus ein Laserbearbeitungsvorgang klassifiziert werden kann.

Die DE 101 03 255 A1 beschreibt ein Verfahren zur automatischen Beurteilung von Laserbearbeitungsprozessen. Hierbei wird der Beobachtungsstrahlengang einer Kamera koaxial über einen Strahlteiler in einen Bearbeitungsstrahlengang eines Arbeitslaserstrahls eingekoppelt, wobei durch den Arbeitslaserstrahl ein Werkstück lasergeschweißt wird. Die Kamera ist zur Verarbeitung von hohen Strahldichteunterschieden und schnellen zeitlichen Vorgängen mit einer hohen Dynamik hinsichtlich Strahldichte und Aufzeichnungsgeschwindigkeit ausgestattet und vorzugsweise als logarithmische CMOS-Kamera aufgebaut, die eine relativ hohe Empfindlichkeit bei niedrigen Strahldichten und ein Abnehmen der Empfindlichkeit bei hohen Strahldichten aufweist. Neben einer solchen logarithmischen Kennlinie können auch angenäherte, stückweise lineare Dynamikverläufe vorgesehen werden. Die CMOS-Kamera mit hoher Dynamik kann bis zu 100 Vollbilder pro Sekunde liefern. Als CMOS-Kamera ermöglicht sie auch einen wahlfreien Zugriff auf Unterbereiche eines flächenhaften Bildsensors der Kamera. Dadurch werden entsprechend der kleineren Bildpunkteanzahl weniger Daten ausgelesen. Bei der gleichbleibenden Datenübertragungsgeschwindigkeit bedeutet dies, dass mehr dieser Teilbilder übertragen werden können. So sind Bildraten von bis zu 8.000 Teilbildern pro Sekunde realisierbar. Jeder einzelne Bildpunkt empfängt das einfallende Lichtsignal mit logarithmischer Empfindlichkeit. Dabei werden sehr helle Signale stärker gedämpft als weniger helle. Damit kann innerhalb der möglichen Helligkeitsstufen eine sehr große Strahldichtedynamik bzw. Leuchtdichtedynamik erfasst werden. Überstrahlungseffekte wie etwa bei einer üblichen CCD-Kamera werden vermieden.

Die WO 01/39919 A2 beschreibt ein Verfahren und eine Vorrichtung zur Qualitätskontrolle der Naht an mit einem Laserstumpf geschweißten Blechen oder Bändern. Bei diesem Verfahren zur Qualitätskontrolle werden eine Vielzahl von Sensordaten von mindestens zwei um den Schweißort angeordneten Sensoren erfasst und mittels eines hierarchisch aufgebauten künstlichen neuronalen Netzes verarbeitet. Ein erster Sensor erfasst die Geometrie eines Fügespalts im Verlauf der Schweißung. Ein zweiter Sensor erfasst die Spaltbreite des Fügespalts. Ein dritter Sensor dient der Erfassung der Plasmaintensität des Laserschweißstrahls. Ein vierter Geometriesensor dient der Erfassung des Kantenversatzes als auch des Nahteinfalls der Schweißnaht im Nachlauf der Schweißung. Bei der Verarbeitung werden beispielsweise zwei unabhängige künstliche neuronale Netze eingesetzt, wobei in dem ersten künstlichen neuronalen Teilnetz die Fülle der Daten auf ein relevantes Minimum reduziert wird und im zweiten neuronalen Teilnetz diese Daten miteinander korelliert werden. Ein Lernprozess des künstlichen neuronalen Netzes mit Hilfe eines Backpropagation-Lernalgorithmus wird ebenfalls beschrieben.

Der Erfindung liegt die Aufgabe zugrunde, ein Verfahren und eine Vorrichtung zur Überwachung eines an einem Werkstück durchzuführenden Laserbearbeitungsvorgangs zu schaffen, durch welchen die Klassifizierung eines Laserbearbeitungszustands und dadurch die Bearbeitungsqualität eines an einem Werkstück durchzuführenden Laserbearbeitungsvorgangs verbessert wird.

Diese Aufgabe wird durch das Verfahren nach Anspruch 1, die Regelungsvorrichtung nach Anspruch 14, und durch den Laserbearbeitungskopf nach Anspruch 18 gelöst. Vorteilhafte Ausgestaltungen und Weiterbildungen der Erfindung werden in den Unteransprüchen dargelegt.

Erfindungsgemäß ist ein Verfahren zur Überwachung, Steuerung oder Regelung eines an einem Werkstück durchzuführenden Laserbearbeitungsvorgangs vorgesehen, das die folgenden Schritte aufweist: Erfassen von zumindest zwei aktuellen Messwerten mittels zumindest einem Sensor, welcher den Laserbearbeitungsvorgang überwacht, Ermitteln von zumindest zwei aktuellen Kennwerten aus den zumindest zwei aktuellen Messwerten, wobei die die zumindest zwei aktuellen Kennwerte gemeinsam einen aktuellen Fingerabdruck in einem Kennwertraum darstellen, Bereitstellen einer vorbestimmten Punktmenge in dem Kennwertraum, und Klassifizieren des Laserbearbeitungsvorgangs durch Erfassen der Lage des aktuellen Fingerabdrucks relativ zur vorbestimmten Punktmenge im Kennwertraum, wobei der zumindest eine Sensor zumindest eine Kameraeinheit umfasst, die Kamerabilder mit unterschiedlichen Belichtungszeiten aufnimmt und diese über ein High Dynamic Range (HDR)-Verfahren miteinander verrechnet, um als aktuelle Messwerte Bilder mit hohem Kontrastverhältnis bereitzustellen.

Hierbei ist es vorteilhaft, wenn das HDR-Verfahren dazu ausgebildet ist, die Kamerabilder so zu verrechnen, dass bei einem durchgeführten Laserbearbeitungsvorgang gleichzeitig die umliegende Bearbeitungsfläche eines zu bearbeitenden Werkstücks sowie das Prozessleuchten in einem Bild sichtbar gemacht werden können.

Dabei werden zweckmäßigerweise die Kamerabilder durch mehrfaches Abtasten eines bildgebenden Sensors der Kameraeinheit, durch simultane Bildaufnahme mit mehreren Kameras oder durch sequentielle Bildaufnahme mit einer Kamera mit unterschiedlichen Belichtungszeiten aufgenommen.

Die Verrechnung der aufgenommenen Kamerabilder durch die zumindest eine Kameraeinheit wird erfindungsgemäß mittels eines Gewichtungsverfahrens anhand eines Entropie-Verfahres oder anhand einer Kamera-Antwort-Funktion durchgeführt.

Auch ist es vorteilhaft, wenn die zu verrechnenden Kamerabilder mittels einer vorlaufenden Kamera vor dem Laserbearbeitungsprozess, einer Kamera, welche die Laserbearbeitungszone abbildet, und/oder einer nachlaufenden Kamera nach dem Laserbearbeitungsprozess aufgenommen werden.

Für eine qualitativ hochwertige Bearbeitung eines Werkstück ist es dabei von Vorteil, wenn bei einem Bearbeitungsvorgang einem mittels des erfindungsgemäßen Verfahrens erkannten "schlechten" Fingerabdruck direkt entgegengewirkt wird, wobei es zweckmäßig ist, wenn das erfindungsgemäße Verfahren zusätzlich einen Schritt des Regelns zumindest eines Prozessparameters eines zugehörigen Aktors derart umfasst, dass bei einem Verlassen des aktuellen Fingerabdrucks aus der Punktmenge des Kennwertraums der zumindest eine Aktor so aktiviert wird, dass die Änderung des zugehörigen Prozessparameters einem Gradienten im Kennwertraum entspricht, der sich ausgehend von dem Fingerabdruck in Richtung der vorbestimmten Punktmenge im Kennwertraum erstreckt.

Hierbei ist es von Vorteil, wenn das Ermitteln eines aktuellen Kennwerts aus zumindest einem aktuellen Messwert ein Verfahren zur Datenreduktion oder Dimensionsreduktion wie eine Hauptkomponentenanalyse, multidimensionale Skalierung, Support Vector Machines oder eine Support Vector Classification umfasst. Durch die Dimensionsreduktion der Sensordaten wird es möglich, dass aufgrund der reduzierten Datenmenge die Klassifikation durch einen Rechner wesentlich schneller erfolgen kann, wodurch beispielsweise auch eine schnelle Regelung eines Laserbearbeitungsvorgangs durchgeführt werden kann.

Es ist jedoch auch vorstellbar und zweckmäßig, dass das Ermitteln eines aktuellen Kennwerts aus zumindest einem aktuellen Messwert mit Hilfe eines neuronalen Netzes erfolgt.

Im Falle eines Einsatzes einer Vielzahl von Sensoren, deren Messdaten oft nicht direkte Rückschlüsse auf eine Bearbeitungssituation zulassen, ist es von Vorteil, wenn die vorbestimmte Punktmenge innerhalb des Kennwertraums mittels eines Lernprozesses festgelegt wird.

Zur Regelung des Bearbeitungsprozesses ist es dabei zweckmäßig, wenn das Gradientenfeld des Kennwertraums in Abhängigkeit der Prozessparameter in unterschiedlichen Bereichen an den Stellen im Kennwertraum ermittelt wird, welche hinsichtlich des Gradienten repräsentativ für den jeweiligen Bereich sind, wobei der Gradient des Kennwertraums in Abhängigkeit eines Prozessparameters durch eine Variation des Prozessparameters an einer vorbestimmten Stelle des Kennwertraums ermittelt wird.

Für eine umfassende Überwachung und eine Ermittlung einer Vielzahl von aussagekräftigen Messdaten ist es zweckmäßig, wenn der zumindest eine Sensor aus einer Gruppe ausgewählt ist, welche zumindest eine Fotodiode mit Filtern für bestimmte Wellenlängen, Körper- und Luftschallaufnehmer, und zumindest eine Kameraeinheit mit einer entsprechenden Oberflächenbeleuchtung umfasst.

Zur Sicherstellung einer umfassenden Regelung des Laserbearbeitungsprozesses ist es zweckmäßig, wenn der zumindest eine Aktor aus einer Gruppe ausgewählt ist, welche eine Steuerung der Laserleistung, eine Geschwindigkeitssteuerung des Bearbeitungskopfes relativ zum Werkstück, eine Steuerung der Fokuslage des Bearbeitungslaserstrahls, eine Steuerung des Abstands des Bearbeitungskopfes zum Werkstück, und eine Steuerung des Lateralversatzes umfasst.

Erfindungsgemäß ist weiter eine Vorrichtung zur Durchführung des erfindungsgemäßen Verfahrens vorgesehen, die zumindest einen Sensor zur Überwachung des Laserbearbeitungsvorgang, welcher zur Erfassung von zumindest zwei aktuellen Messwerten geeignet ist, eine Datenverarbeitungseinheit zum Ermitteln von zumindest zwei Kennwerten aus den zumindest zwei aktuellen Messwerten zum Erstellen eines aktuellen Fingerabdrucks in einem Kennwertraum, eine Speichereinheit zum Speichern einer vorbestimmten Punktmenge innerhalb des Kennwertraums, und eine Klassifizierungseinheit umfasst, die zur Bewertung des Laserbearbeitungsvorgangs durch Erfassen der Lage des aktuellen Fingerabdrucks relativ zur vorbestimmten Punktmenge im Kennwertraum geeignet ist.

Für den Einsatz der erfindungsgemäßen Vorrichtung in einem geregelten Bearbeitungsprozess ist hierbei von Vorteil, wenn die Vorrichtung ferner eine Regelungseinheit zum Regeln zumindest eines Prozessparameters eines zugehörigen Aktors derart umfasst, dass bei einem Verlassen des aktuellen Fingerabdrucks aus der Punktmenge des Kennwertraums der zumindest eine Aktor so aktiviert wird, dass die Änderung des zugehörigen Prozessparameters einem Gradienten im Kennwertraum entspricht, der sich ausgehend von dem Fingerabdruck in Richtung der vorbestimmten Punktmenge erstreckt.

Zweckmäßigerweise ist dabei der zumindest eine Sensor aus einer Gruppe ausgewählt, welche zumindest eine Fotodiode mit Filtern für bestimmte Wellenlängen, Körper- und Luftschallaufnehmer, und zumindest eine Kameraeinheit mit einer entsprechenden Oberflächenbeleuchtung umfasst.

Weiter ist vorteilhafterweise der zumindest eine Aktor aus einer Gruppe ausgewählt, welche eine Steuerung der Laserleistung, eine Geschwindigkeitssteuerung des Bearbeitungskopfes relativ zum Werkstück, eine Steuerung der Fokuslage des Bearbeitungslaserstrahls, eine Steuerung des Abstands des Bearbeitungskopfes zum Werkstück, und eine Steuerung des Lateralversatzes umfasst.

Ferner ist erfindungsgemäß ein Laserbearbeitungskopf zur Bearbeitung eines Werkstücks mittels eines Laserstrahls vorgesehen, der die erfindungsgemäße Vorrichtung umfasst.

Die Erfindung wird im folgenden beispielsweise anhand der Zeichnung näher erläutert. Es zeigen:

Figur 1 ein Flussdiagramm mit den wesentlichen Komponenten des Bearbeitungsprozesses eines Werkstücks gemäß dem erfindungsgemäßen Verfahren,

Figur 2 eine Übersicht der im erfindungsgemäßen Verfahren eingesetzten Sensoren zur Überwachung und Erfassung des Laserbearbeitungsprozesses,

Figur 3 eine stark vereinfachte schematische Ansicht der in einem erfindungsgemäßen Bearbeitungsprozess eingesetzten Bauteile,

Figur 4A eine stark vereinfachte schematische Ansicht eines Teils der im erfindungsgemäßen Verfahren eingesetzten Aktoren bei einem Laserstrahlschweißprozess,

Figur 4B eine stark vereinfachte schematische Ansicht eines Teils der im erfindungsgemäßen Verfahren eingesetzten Aktoren bei einem Laserstrahlschneidprozess,

Figur 5A ein Flussdiagramm der Erstellung eines Fingerabdrucks gemäß dem erfindungsgemäßen Verfahren unter Einsatz von linearen sowie nichtlinearen Dimensionsreduzierern,

Figur 5B ein Flussdiagramm der Erstellung eines Fingerabdrucks gemäß dem erfindungsgemäßen Verfahren unter Einsatz eines neuronalen Netzes,

Figur 6A ein Flussdiagramm des Klassifizierungsvorgangs gemäß dem erfindungsgemäßen Verfahren unter Einsatz von linearen sowie nichtlinearen Dimensionsreduzierern, und

Figur 6B ein Flussdiagramm des Klassifizierungsvorgangs gemäß dem erfindungsgemäßen Verfahren unter Einsatz eines neuronalen Netzes,

Figur 7 eine schematische Skizze, welche ein Fehlererkennungsverfahren illustriert,

Figur 8 ein Flussdiagramm, welches das erfindungsgemäße Erlernen der Fingerabdrücke bzw. der Kennwerte oder Merkmale illustriert,

Figur 9 ein Flussdiagramm der Dimensionsreduktionsmethode gemäß der Erfindung,

Figur 10 ein Flussdiagramm der erfindungsgemäßen Beurteilung des aktuellen Bearbeitungsprozesses,

Figur 11 ein Flussdiagramm der Schätzung von neuen Steuerparametern gemäß der Erfindung,

Figur 12 eine schematische Ansicht eines Kamerabildes, welches mit einem HDR-Verfahren gemäß der Erfindung verarbeitet ist, und

Figur 13 ein Blockschaltbild einer erfindungsgemäßen HDR-Bildsequenzverarbeitung.

Figur 14 ein Flussdiagramm eines Klassifizierungsvorgangs unter Einsatz eines Reinforcement Learning-Verfahrens bei einem Laserbearbeitungsvorgang gemäß der Erfindung

Figur 15 ein Flussdiagramm eines Klassifizierungsvorgangs unter Einsatz eines Diskriminanzanalyse-Verfahrens bei einem Laserbearbeitungsvorgang gemäß der Erfindung, und

Figur 16 ein Flussdiagramm eines Regelungsvorgangs mittels Sollwerten, die durch Dimensionsreduktion gewonnen werden, bei einem Laserbearbeitungsvorgang gemäß der Erfindung.

In den verschiedenen Figuren der Zeichnung sind einander entsprechende Bauelemente mit gleichen Bezugszeichen versehen.

Erfindungsgemäß wird ein kognitives Lasermaterialbearbeitungssystem bereitgestellt, welches durch den Einsatz von Maschinenlernen und selbstlernender Algorithmen kognitive Fähigkeiten besitzt. Das zugehörige erfindungsgemäße Verfahren kann in der Lasermaterialbearbeitung zur Prozessbeobachtung, Prozesskontrolle, und Prozessregelung eingesetzt werden.

Ein System kann zwei Arten von kognitiven Fähigkeiten besitzen: Erstens, es erscheint für einen externen Betrachter, als ob das beobachtete System kognitive Fähigkeiten besäße, beispielsweise die Fähigkeit zu lernen und sich selbständig zu verbessern. Zweitens, das System realisiert die kognitiven Fähigkeiten in einer ähnlichen Weise wie ein natürlicher Organismus, beispielsweise das menschliche Gehirn.

Das erfindungsgemäße System besitzt kognitive Fähigkeiten wie das Lernen sowie das selbstständige Erkennen und Verbessen von Fehlern, die in der Lasermaterialbearbeitung eingesetzt werden. Der Einsatz von kognitive Fähigkeiten ist besonders vorteilhaft im Bereich der Lasermaterialbearbeitung. Bearbeitungsprozesse wie das Trennen oder Fügen von Werkstücken unterscheiden sich sehr stark von Prozess zu Prozess.

Bisher ist es bekannt, jeden Prozess zunächst individuell manuell einzustellen. Nach einer Einstellung der Prozessparameter wird hierbei der Prozess nur beobachtet und entsprechend manuell angepasst. Für den Fall, dass eine nächste Charge an Werkstücken beispielsweise verschmutzt ist oder hinsichtlich der Werkstückdicke von der vorhergehenden Charge an Werkstücken abweicht, muss der Prozess häufig manuell nachgestellt werden. Eine automatische Adaption an Prozessänderungen war entweder überhaupt nicht oder nur in sehr geringem Umfang möglich. Tatsächlich gehen die Anforderungen gerade von Fahrzeugherstellern, die in einer Produktionsstraße gleich mehrere Fahrzeuge herstellen wollen, dahin, dass sich die Produktionssysteme schnell und adaptiv auf die Bearbeitungsprozesse anpassen können.

Das schnelle Erlernen von Bearbeitungsprozessen und das Erkennen, Verbessern und Vermeiden von Fehlern während der Bearbeitung sind Anforderungen die durch die kognitiven Fähigkeiten des erfindungsgemäßen Bearbeitungssystems erfüllt werden.

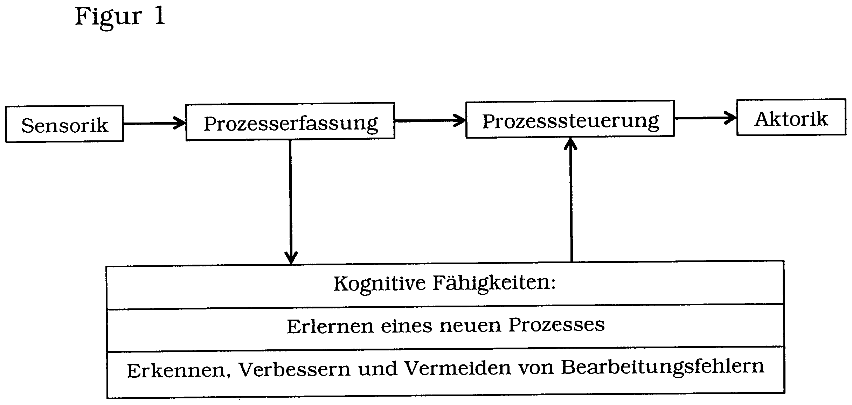

In Fig. 1 ist ein Flussdiagramm des erfindungsgemäßen Verfahrens mit seinen wesentlichen Komponenten schematisch dargestellt, welche im Folgenden Schritt für Schritt erläutert werden.

Bei der Prozesserfassung werden erfindungsgemäß alle relevanten Informationen des Bearbeitungsprozesses mit einem Sensorsystem mit zumindest einem Sensor erfasst. Durch die eingesetzten Sensoren werden eine Vielzahl von Messwerten und Informationen über den Prozess erhalten, um Merkmale, Prozessabbildungen, Prozesscharakteristiken oder eindeutige Fingerabdrücke des Prozesses, welche im Folgenden als Kennwerte bezeichnet werden, aus den Messdaten der den Bearbeitungsprozesses überwachenden Sensoren ermitteln zu können. Das Ermitteln erfolgt insbesondere durch Errechnen oder eine andere geeignete, vorzugsweise elektronische Verarbeitung der Messwerte.

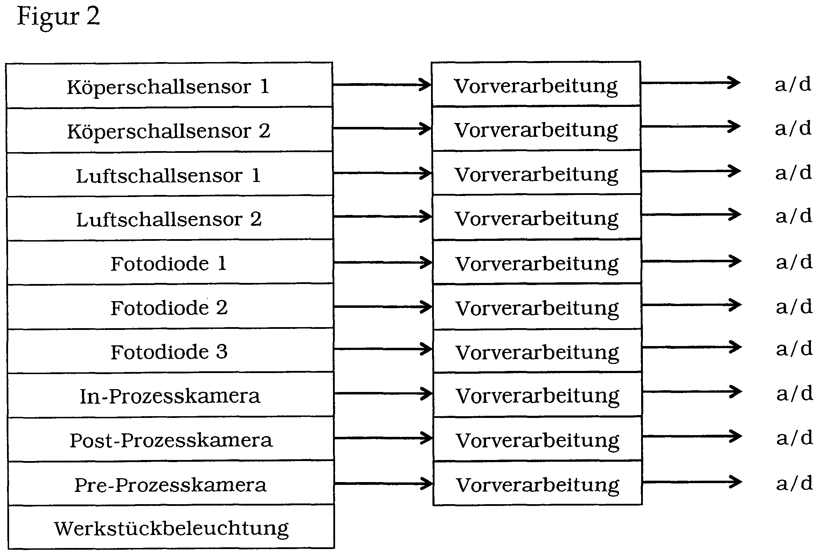

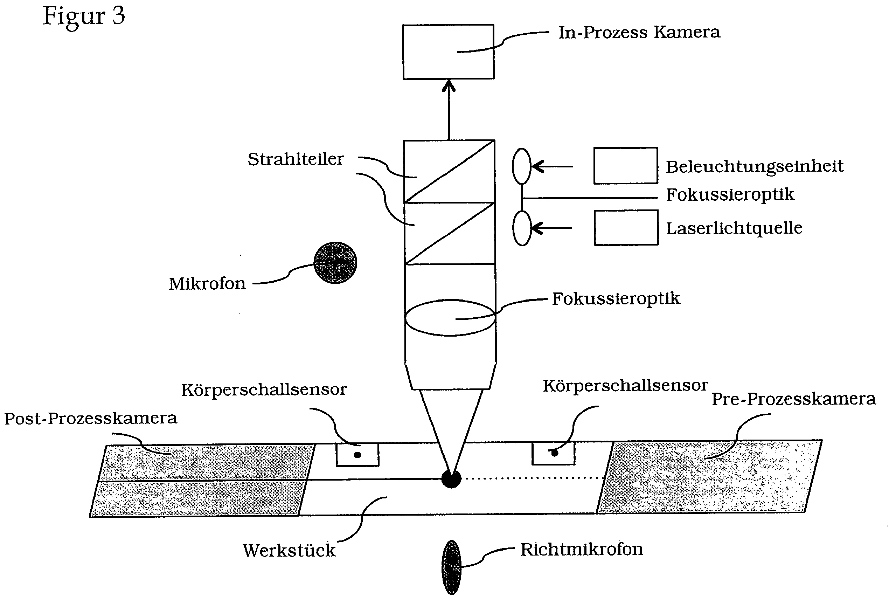

Eine Übersicht über die erfindungsgemäß eingesetzten Sensoren ist in Figur 2 und ein Aufbau eines erfindungsgemäßen Laserbearbeitungssystems mit den entsprechenden Sensoren ist in Figur 3 gezeigt.

Neben bereits bekannten Sensoren zur Überwachung eines Laserbearbeitungsprozesses werden erfindungsgemäß zusätzlich Sensoren zum Erfassen von Körper- und Luftschall eingesetzt. Zur Schallaufnahme ist es zweckmä-ßig, mindestens zwei Sensoren je für Körper- und Luftschall einzusetzen. Außerdem werden die Sensorsignale für Körper- und Luftschall noch je nach Prozess in der Vorverarbeitung gefiltert, verstärkt und entsprechend abgetastet. Für die Luftschallaufnahme eignen sich unterschiedliche Richtcharakteristiken. Durch geschickte Anordnung der Schallaufnehmer können im Anschluss die Orte der Schallquellen und die Ausbreitungsrichtung errechnet werden. So können auch Störgeräusche von nicht relevanten Quellen und Hintergrundsgeräusche reduziert oder Methoden wie aktive Rauschunterdrükkung ("Active Noise Cancellation") angewandt werden.

Im Laserbearbeitungskopf sind ferner Sensoren zur Emissionserfassung bestimmter Wellenlängen angebracht, welche bevorzugterweise Photodioden sind, die für einen bestimmten Wellenlängenbereich sensitiv sind. Hierbei können zusätzlich noch optische Bandpassfilter zur Auswahl bestimmter Wellenlängenbereiche vor den entsprechenden Photodioden angeordnet sein. Die Messwerte dieser Sensoren werden ebenfalls erfasst und abgetastet.

Weiter werden Kameras, die den Laserbearbeitungsvorgang und insbesondere die Laserbearbeitungszone beobachten, zur Messdatengewinnung verwendet. So kann eine In-Prozess Kamera eingesetzt werden, deren Beobachtungsstrahlengang koaxial in den Strahlengang des Arbeitslasers im Bearbeitungskopf eingekoppelt ist, um somit die Laserbearbeitungszone abzubilden. Alternativ kann auch außerhalb des Bearbeitungskopfes eine Kamera den Bearbeitungsprozess erfassen. Eine vorlaufende Kamera, genannt Pre-Prozess-Kamera, und eine nachlaufende Kamera, genannt Post-Prozess-Kamera, können den Laserbearbeitungsprozess ebenfalls erfassen. Für die Kameraerfassung sind diverse Werkstückbeleuchtungskonzepte je nach Bearbeitungsprozess geeignet. So können erfindungsgemäß zur Beleuchtung Leuchtdioden, welche kostengünstig sind und in einem breiten Wellenlängenbereich abstrahlen können, oder Laser in verschiedenen Wellenlängen mit entsprechender Optik zur Fokussierung auf den Kameraausschnitt auf der Werkstückoberfläche eingesetzt werden. Zur Vorverarbeitung der Kameradaten sind Datenverarbeitungsverfahren wie "Region of Interest", "Qualas", oder eine Geometriedatenauswertung besonders geeignet und bevorzugt. Zusätzlich wird erfindungsgemäß ein High Dynamic Range (HDR)-Verfahren eingesetzt, welches das Kontrastverhältnis der erfassten Kamerabilder vorteilhafterweise erhöht. Dazu werden die Bilder mit unterschiedlichen Belichtungszeiten erfasst und über ein HDR-Verfahren miteinander verrechnet, so dass Bilder mit sehr hohem Kontrastverhältnis entstehen.

Die Qualität der Prozesserfassung steigt mit der Anzahl der eingesetzten Sensoren, jedoch steigen die Kosten des Systems entsprechend. Es soll daher angemerkt werden, dass das erfindungsgemäße Verfahren nicht auf den Einsatz der Vielzahl von Sensoren beschränkt ist, sondern bereits unter Verwendung lediglich eines Sensors, beispielsweise der In-Prozesskamera, durchgeführt werden kann.

Im Folgenden wird die Prozesssteuerung gemäß dem erfindungsgemäßen Verfahren unter Verwendung von spezifischen Aktoren beschrieben.

In der Lasermaterialbearbeitung wird normalerweise ein Steuerprogramm für alle beteiligten Aktoren manuell entworfen. Während des Prozesses wird dieses Steuerprogramm nur über eine Prozessüberwachung kontrolliert oder mit fest definierten Regelkreisen wie einer kapazitiven Abstandssensorik beim Laserschneiden angepasst.

Im erfindungsgemäßen Verfahren werden hingegen auf die laufende Prozesssteuerung zugegriffen und weitere neue Prozesssteuerungsmöglichkeiten integriert.

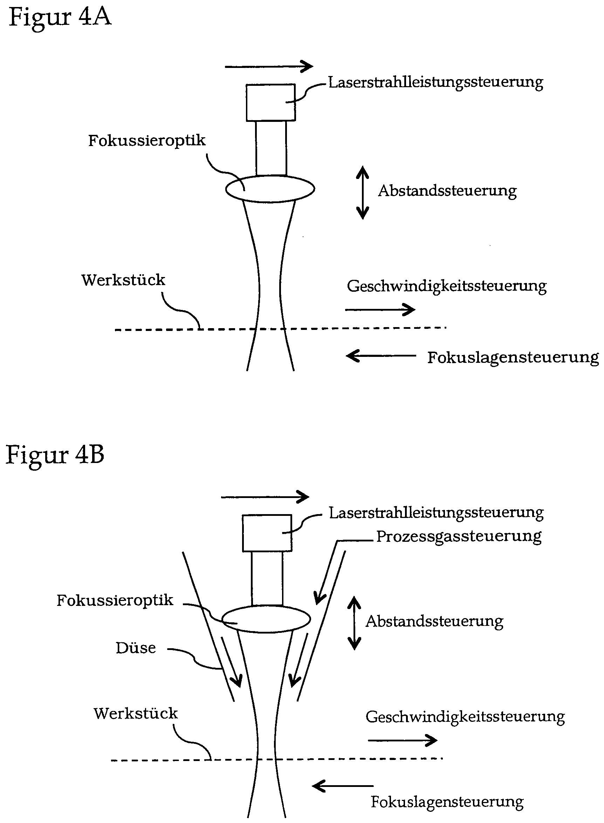

Wie in Fig. 4A gezeigt, werden bei dem Bearbeitungsverfahren Laserstrahlschweißen die Laserstrahlleistung, der Abstand zwischen Bearbeitungskopf und Werkstück, die Geschwindigkeit des Bearbeitungskopfes relativ zum Werkstück und die Lage des Fokuspunktes der bearbeitenden Laserstrahlung gesteuert oder geregelt.

Wie in Fig. 4B gezeigt, werden beim Bearbeitungsverfahren Laserschneiden neben den genannten Prozessparametern erfindungsgemäß zusätzlich noch die Prozessgaszufuhr gesteuert oder geregelt. Außerdem können bei beiden Bearbeitungsverfahren Steuersignale in Ihrer Intensität mit einer bestimmten Frequenz moduliert werden, z.B. eine Modulation der Laserstrahlungsintensität zwischen 90 und 100 Prozent. Da das Steuersignal bekannt ist, können aus der Systemantwort über die Sensordaten Erkenntnisse über den Prozess wie beispielsweise ein Gradientenfeld des Kennwertraums in Abhängigkeit der Prozessparameter in unterschiedlichen Messbereichen zurückgewonnen werden. Die Steuerungen können über entsprechende Linearachsen, Robotersteuerung oder sonstige Steuerschnittstellen realisiert werden.

Obwohl die Regelungsmöglichkeiten mit steigender Anzahl der eingesetzten Aktoren zunehmen, da mehr Prozessparameter gesteuert werden können, steigen entsprechend die Kosten des Systems. Daher soll angemerkt werden, dass das erfindungsgemäße Verfahren nicht auf den Einsatz der Vielzahl von Aktoren beschränkt ist, sondern bereits unter Verwendung lediglich eines Aktors, beispielsweise einer Laserleistungssteuerung für das Laserschweißen oder einer Prozessgassteuerung für das Laserschneiden durchgeführt werden kann.

Im folgenden wird der Schritt des Klassifizierens des Laserbearbeitungsvorgangs gemäß dem erfindungsgemäßen Verfahren genauer beschrieben.

Zur Realisierung eines selbstständigen Erkennens und Behebens von Fehlern durch das erfindungsgemäße Laserbearbeitungssystem muss die technische Kognition aus den Sensordaten abstrahiert werden, damit das erfindungsgemäße System selbstständig Entscheidungen für die Ansteuerung der Aktorik treffen kann.

Weiter ist es vorteilhaft, wenn das System durch einen Bediener des Systems geschult werden kann und selbst lernfähig ist. Zur Realisierung der kognitiven Lasermaterialbearbeitung ist erfindungsgemäß vorgesehen, dass das System die wesentlichen Kennwerte aus allen verwendeten Sensoren selbstständig bereits kennt oder diese erfasst und erlernt und anschließend Entscheidungen für die Prozesssteuerung trifft. Im folgenden sollen drei Stufen des erfindungsgemäßen Verfahrens dargestellt werden, nämlich das Erlernen der Prozessumgebung, die Klassifizierung des aktuellen Prozessergebnisses und die Steuerung oder Regelung des Prozesses.

Zunächst soll das Erlernen der Prozessumgebung erläutert werden. Um den Prozess kennenzulernen, sind zunächst Referenzfahrten bzw. Testbearbeitungen notwendig. Jeder Bearbeitungsprozess hat ein gewünschtes Ergebnis und ein davon abweichendes. Die Testbearbeitung oder Referenzfahrt muss beide Ergebnisse und idealerweise auch die Übergänge enthalten, sowie die Reaktion des Systems auf die Prozesssteuerung. Soll beispielsweise eine Schweißnaht im Überlappstoß von Edelstahl mit einer definierten Schweißnahtbreite von X mm und einer Länge von Y cm erzielt werden, so muss mindestens eine Referenzfahrt gefahren werden, in der mindestens ein Prozessparameter so variiert wird, dass in dieser Referenzfahrt sowohl das definierte als auch die Definitionsüberschreitung in beiden Richtungen des Prozessparameters enthalten ist.

In diesem Fall kann der menschliche Systembediener erfindungsgemäß eine Referenzfahrt mit einer steigenden Laserleistung als Prozessparameter durchführen, bei dem im Prozess die obere und untere Definitionsgrenze auftritt und überschritten wird. Ist die untere Definitionsgrenze beispielsweise die Durchschweißung und die obere Definitionsgrenze der Nahteinfall, so kann eine Referenzfahrt mit einer Laserleistung beginnen, die noch keine Durchschweißung hervorruft. Während der Referenzfahrt wird die Laserleistung so gesteuert, dass sie kontinuierlich steigt, bis ein Nahteinfall auftritt. Dieser Prozess wird mit der beschriebenen Prozesssensorik, die die entsprechenden Messwerte aufnimmt, beobachtet und zum Erlernen der Prozessumgebung verwendet.

Ein anderes Beispiel betrifft Produktionsprobleme zwischen zwei Chargen von fettigen und nicht fettigen Werkstücken. Hier müssten zum Erlernen bei der Referenzfahrt ebenfalls die Definitionsgrenzen enthalten sein. Der Bediener teilt dem kognitiven Lasermaterialbearbeitungssystem mit, wo die Definitionsgrenzen liegen, so kann das erfindungsgemäße System lernen, zwischen den Bereichen zu unterscheiden.

Zum Erlernen der Prozessumgebung sind erfindungsgemäß zwei unterschiedliche Verfahren vorgesehen, welche im Folgenden beschrieben werden.

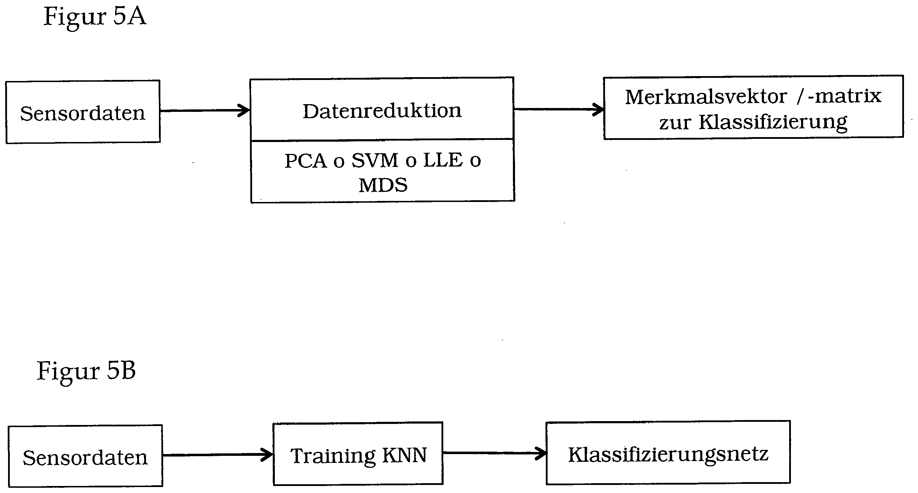

Wie in Figur 5A gezeigt, können zur Erlernung der Prozessumgebung lineare sowie nichtlineare Dimensionsreduzierer und Mannigfaltigkeit-Lernmethoden wie Hauptkomponentenanalyse (PCA), MDS (Multidimensional Scaling), LLE (Locally Linear Embedding) und SVM (Support Vector Machines) eingesetzt werden. Diese Methoden können sowohl in Kombination als auch alleinstehend eingesetzt werden. Zur Erlernung der Prozessumgebung kann weiter eine Diskriminanzanalyse eingesetzt werden, wie weiter unten beschrieben wird.

Wie in Fig. 5B gezeigt, ist ein anderer Ansatz zur Erlernung der Prozessumgebung der Einsatz eines Künstlichen Neuronalen Netzes (KNN).

Im ersten Ansatz wird, vereinfacht beschrieben, die hohe Menge an Sensordaten fusioniert und reduziert. Dabei bleiben möglichst alle wesentlichen Merkmale erhalten und redundante Information werden vernachlässigt. Am Ende steht für jeden beobachteten Zeitpunkt ein Vektor bzw. eine Matrix aus Kennwerten, die aus den Messwerten der Sensoren gewonnen, jedoch in der Datenmenge stark reduziert wurden. Mit dieser Matrix bzw. Vektor, den man auch als Fingerabdruck des Prozesses oder Charakteristik bezeichnen kann, soll der Prozesszustand eindeutig klassifiziert werden können.

Mit Künstlichen Neuronalen Netzen ist das Vorgehen ein anderes, da hier das Netz trainiert wird und die gelernten Informationen anschließend im Netz vorhanden sind, welche das Ergebnis dann klassifizieren kann. Die Ausgangsneuronen ergeben so zunächst eine Klassifizierung anhand der trainierten Daten. Anhand dieser Klassifizierung kann anschließend geregelt werden.

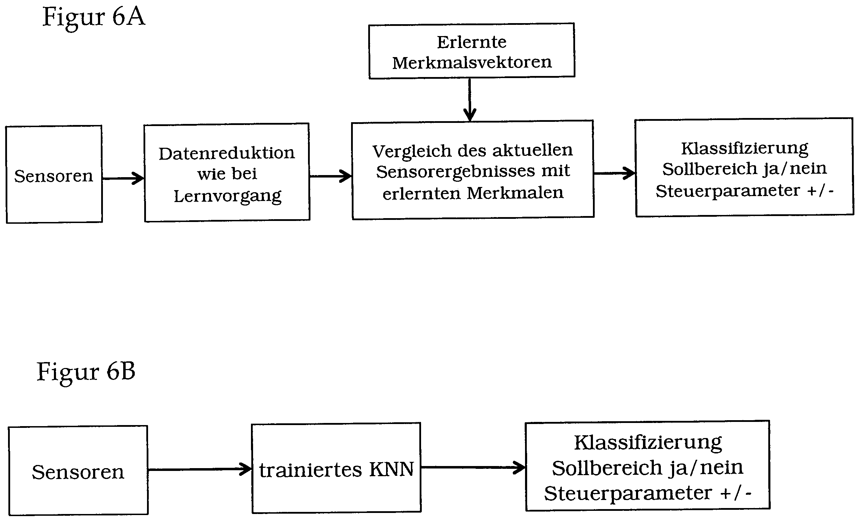

Wird der Bearbeitungsprozess nun beobachtet, muss das aktuelle Prozessergebnis erfasst werden, mit dem vorher gelernten Sollbereich, welcher als Punktmenge im Kennwertraum aufgefasst werden kann, verglichen werden, und ggf. die Prozessparameter angepasst werden, wie in den Fig. 6A und 6B gezeigt. Die Prozessparameteranpassung kann und sollte bereits vor dem Austritt aus dem Sollbereich erfolgen. Hierbei kann die vorbestimmte Punktmenge, welche für die Regelung des Systems verwendet wird, so angepasst werden, dass in einem Regelungsfall der aktuelle Fingerabdruck des Sensorsystems die vorbestimmte Punktmenge bereits zu einem Zeitpunkt verlässt, wenn der Fingerabdruck in einen Randbereich des Sollbereichs eintritt.

Im folgenden wird die Klassifizierung des aktuellen Prozessergebnisses nach der ersten Methode beschrieben (Fig. 6A). Das kognitive Lasermaterialbearbeitungssystem hat bereits in der Datenbank eines Speichers die erlernte Prozessumgebung, die gelernten Merkmale oder Fingerabdrücke in Form von einem Vektor oder einer Matrix gespeichert. Die aktuell vom Prozess gewonnenen Messwerte der Sensoren müssen zunächst in der Datenmenge reduziert und zum Vergleich in den gleichen Datenraum, also den Kennwertraum, wie die Merkmalsvektoren oder Fingerabdrücke gebracht werden, somit wird ein aktueller Fingerabdruck als reduzierter Sensordatenvektor bzw. Matrix im Kennwertraum erhalten, der mit der erlernten Punktmenge im Kennwertraum verglichen wird. Somit kann die Wahrscheinlichkeit erhalten werden, dass der aktuell erfasste Datenpunkt am nächsten zu einem gewissen Merkmalspunkt ist. Hierbei ist bekannt, ob dieser Merkmalspunkt noch innerhalb des Sollbereiches ist, ferner ist die wahrscheinlich notwendige Korrektur des Prozessparameters bekannt.

Die Klassifizierung des aktuellen Prozessergebnisses mittels neuronaler Netze (Fig. 6B) erfolgt durch das trainierte Netz. Klassifizierungsergebnis ist, ob der Prozess noch im Sollbereich liegt und mit welcher Tendenz der Prozessparameter angepasst werden soll.

Die Steuerung bzw. Regelung des Prozesses gemäß dem erfindungsgemäßen Verfahren erfolgt auf die folgende Weise. Mittels des Klassifizierungsergebnisses kennt die Regelungseinheit bereits die Richtung und die Stärke, mit der die entsprechenden Aktoren aktiviert werden müssen. Verschiedene Regelverfahren können eingesetzt werden. So kann beispielsweise die Minimierung der geodesischen Distanz zwischen gewünschten Merkmalsvektor und Ergebnisvektor oder ein Regelverfahren mit Kalman-Filter und Minimierung des mittleren quadratischen Fehlers eingesetzt werden. Zudem kann die Tendenz zur Regelung aus den multidimensionalen Merkmalsräumen oder Kennwerträumen über die "Support Vector"-Klassifikation ermittelt werden. Der Regler darf den vorher definierten Sicherheitsbereich nicht überschreiten.

Die Erfindung kann in mehreren Verfahrensvarianten angewandt werden, von denen an dieser Stelle einige vorgestellt werden.

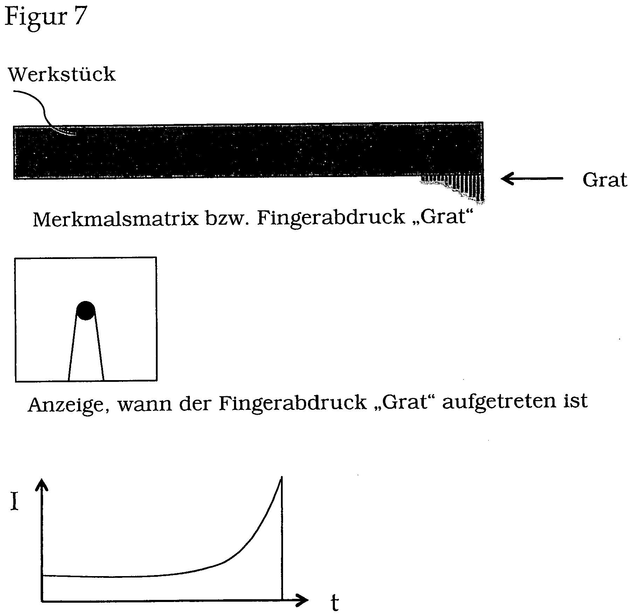

In der Prozessüberwachung ist es wichtig, einige Fehler sauber zu diskutieren. Auch hier zeigt der Einsatz von kognitiver Lasermaterialbearbeitung gute Ergebnisse. Beim Fehlererkennungsverfahren (wie in Fig. 7 illustriert) muss zunächst ein Fehler bewusst vom Bediener provoziert werden, damit das kognitive System diesen erlernen kann. Hat das System den Fehler gelernt kann es diesen genau detektieren. Dies soll mit folgendem Beispiel illustriert werden. Erkannt werden soll der Gart oder die Bart-Entstehung an den Schnittkanten bei einem Laserschneidprozess mit einer Prozesssensorik mit diversen Sensoren, u.a. einer In-Prozess Kamera. Der Bediener macht eine Referenzfahrt mit konstanten Steuerparametern außer dem Prozessgas, welches er über die Steuerung während der Referenzfahrt so weit abfallen lässt, so dass Grat deutlich entsteht. Ist die Referenzfahrt beendet, errechnet das kognitive Lasermaterialbearbeitungssystem über die PCA, Principal Components Analyse oder eine Kombination aus den anderen Methoden der vorgestellte Dimensionsreduzierer, die entsprechenden Hauptkomponenten aus den Sensordaten. Der Bediener nennt dem System nun, an welchen Stellen des Werkstükkes Gart entstanden ist. Aus der Information, wo der Grat an der Schnittkante entstanden ist und an welchen Stellen entsprechende Hauptkomponenten aus den Sensordaten errechnet wurden, kann das kognitive System anschließend die entsprechende Komponente, ein Vektor bzw. Matrix, errechnen, die die gesammelten Merkmale bzw. den Fingerabdruck für das Entstehen von Grat enthält. Aus den aktuellen Sensordaten im weiteren Betrieb der Anlage kann dann mit Matrix-Vektor Algebra während des Prozesses errechnet und dem Bediener angezeigt werden, ob der gelernte Fehler aufgetreten ist.

Das gleiche Verfahren kann eingesetzt werden, um beispielsweise Effekte beim Laserstrahlschweißen oder Laserschneiden zu erkennen: Falscher Freund, Nahteinfall, Durchschweißung, Schnittbreite X, Status Durchschnitt, Schnittkantenrauhigkeit, Verbrennungseffekte, Schweißnahtbreite Y, Status Einschweißung, Status Durchschweißung, Status Anbindequerschnitt, Spalt im Überlappstoß, Spalt im Stumpfstoß, Lateralversatz, Auswürfe, Poren, Löcher.

Die Erfindung kann auch dazu eingesetzt werden, einen Chargenwechsel zu vereinfachen, der zuvor eine Anpassung des Lasermaterialbearbeitungssystems erforderte. Die Werkstücke der neuen Charge haben geringfügig geänderte Eigenschaften, z.B. Materialdicke oder Verschmutzungsgrad. Es wird wieder zunächst eine Lernphase und anschließend eine Klassifizierungsphase durchgeführt. Nach der Klassifizierungsphase kann bereits ein Regelprozess realisiert werden. Es können aber auch neue Steuerparameter für eine Prozessänderung geschätzt werden, die z.B. durch einen Chargenwechsel auftreten.

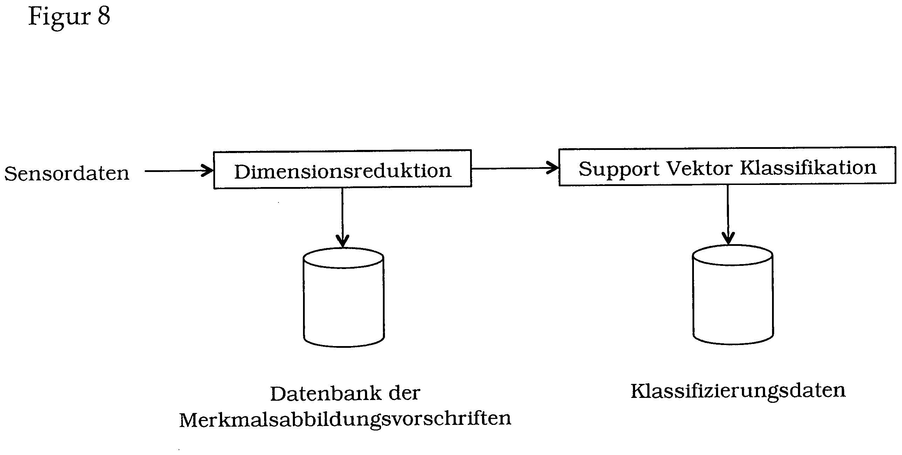

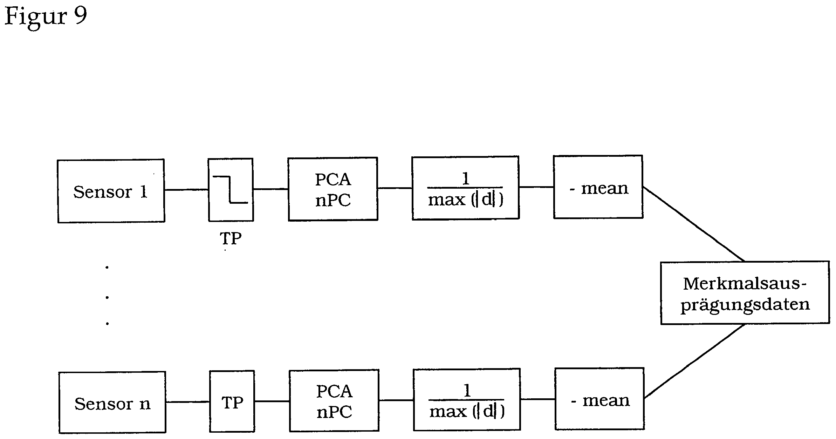

In der Lernphase werden gemäß Figur 8 die Messwerte der Prozesssensorik von einer Referenzfahrt erfasst. Als Referenzfahrt werden erneut konstante Prozesssteuerungsparameter eingestellt, bis auf einen Steuerparameter, der variiert wird. Bei einem Laserstrahlschweißprozess kann beispielsweise die Laserleistung stetig während der Referenzfahrt gesteigert werden. Die erfassten Daten werden vom kognitiven Lasermaterialbearbeitungssystem mit Dimensionsreduzierern bearbeitet, vgl. Figur 9. Die Ausgangsdaten jedes verwendeten Sensors werden zunächst mit einem entsprechenden Tiefpass gefiltert. Anschließend werden über die Principal Component Analyse die n Hauptkomponenten ausgibt. Die Daten werden anschließend normiert und vom Mittelwert befreit. Am Ende dieses Verarbeitungsschrittes erhält man die Merkmalsausprägungsdaten für die verwendeten Sensoren zu jedem erfassten Zeitabschnitt. Die entsprechenden Merkmale oder Fingerabdrücke und deren Abbildungsvorschrift werden in einer Datenbank für Merkmalsabbildungsvorschriften abgelegt. Der Bediener des Systems definiert nun auf dem Werkstück einen Bereich, der dem gewünschten Ergebnis entspricht. Diese Definition wird in einen Vektor überführt, mit welchem ein Klassifizierter trainiert werden kann. Um eine Klassifizierung durchführen zu können wird in diesem Verfahren Support Vector Machines verwendet. In diesem Fall wird ein Verfahren der Support Vector Classification angewandt. Es beschreibt ein mathematisches Verfahren zur Unterscheidung von gewünschten und nicht gewünschten Prozessergebnissen, die durch eine multidimensionale Trennung des Merkmalsraumes durchführt, basierend auf den Vorgaben des Bedieners. Die Datenbank mit Merkmalsabbildungsvorschriften beschreibt die Abbildungsvorschrift und die Klassifizierungsdatenbank beschreibt die Trennung der Merkmalsräume.

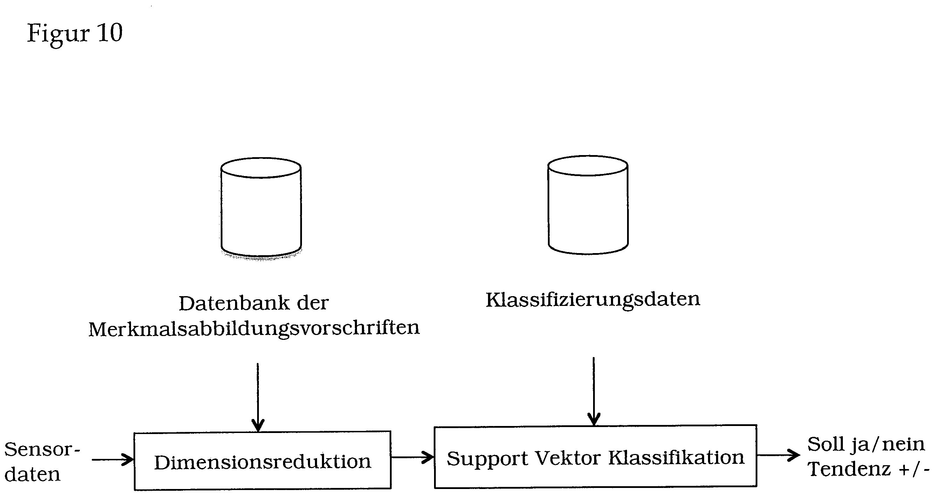

Im Folgenden wird die Anwendung des erlernten Prozesswissens zur Klassifizierung bzw. Beurteilung des aktuellen Bearbeitungsprozesses (Fig. 10) beschrieben. Nach der Lernphase überwacht das kognitive Lasermaterialbearbeitungssystem den Bearbeitungsprozess, nach den vorher eingelernten Bedienerwünschen. Die Sensordaten werden basierend auf den Vorgaben der bestimmten Merkmalsabbildungsvorschriften dimensionsreduziert. Auf die ausgegebenen Daten befinden sich im vorbestimmten Merkmalsraum oder Kennwertraum. Die vom Bediener gelernten Klassifizierungsdaten über das Support Vector Classification Verfahren dienen zur Beurteilung des aktuellen Bearbeitungsprozesses. Es kann beurteilt werden, ob das aktuelle Prozessergebnis im vom Bediener definierten Sollbereich liegt und welche Tendenz über eine Wahrscheinlichkeit für den Prozesssteuerungsparameter zur Regelung des Prozesses eingeschlagen werden soll.

Nun soll die Schätzung von neuen Steuerparametern oder Prozessparametern bei kleinen Prozessänderungen durch einen Chargenwechsel beschrieben werden. Wird der Bearbeitungsprozess für eine gewisse Dauer abgeändert, z.B. durch eine leichte Änderung der Werkstückeigenschaften bei einem Chargenwechsel, können die neuen Steuerparameter geschätzt werden. Dazu muss neben der vorherigen Referenzfahrt 1 eine neue Referenzfahrt 2 durchgeführt werden. Bei Referenzfahrt 1 und 2 wurden die gleichen Steuerparameter angewendet.

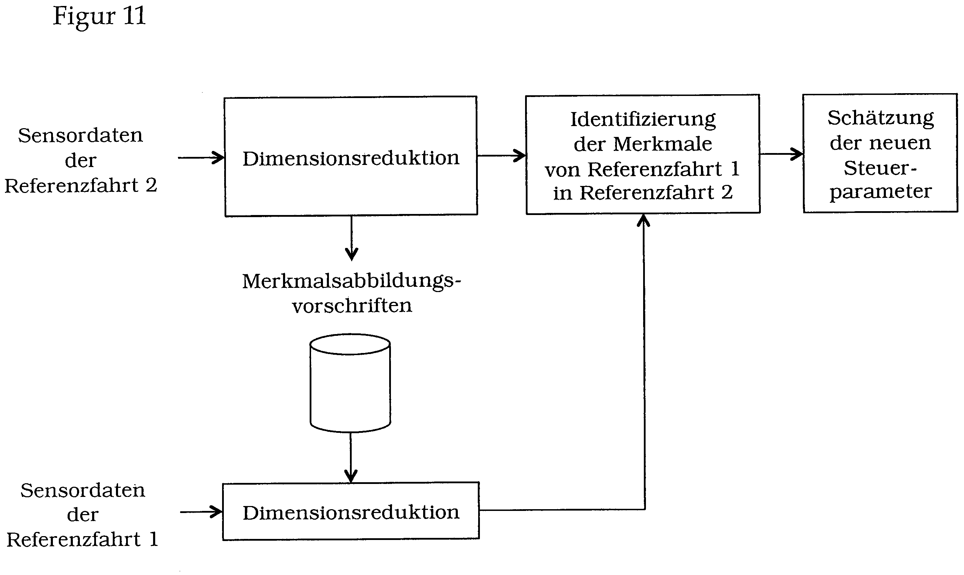

Wie in Figur 11 gezeigt, werden die Sensordaten oder die Messwerte der Sensoren von Referenzfahrt 2 erneut dimensionsreduziert. Die Abbildungsvorschriften werden nun auf die aufgezeichneten Sensordaten der Referenzfahrt 1 angewandt. Über das erfindungsgemäße Verfahren der Support Vector Classification werden die Auftrittswahrscheinlichkeiten der Merkmale aus Referenzfahrt 1 während der Referenzfahrt 2 errechnet. Das kognitive Lasermaterialbearbeitungssystem kann so aus der Position auf dem Werkstück bzw. aus den an dieser Stelle verwendeten Steuerparametern und den Auftrittswahrscheinlichkeiten der Merkmale errechnen, welche Steuerparameter im neuen Prozess ein sehr ähnlich oder nahezu gleiches Ergebnis wie im vorherigen Bearbeitungsprozess hervorrufen werden.

Im merkmalsbasierten Regelungsverfahren werden wie in den zuvor geschilderten Verfahren Merkmale aus den Prozessdaten gewonnen. Diese Merkmale werden durch anfängliche und regelmäßig wiederkehrende Referenzfahrten vom Bediener klassifiziert, mit entsprechender Bewertung, ob der Steuerparameter angepasst werden soll. Die entsprechenden Merkmale und die dazugehörigen Klassifizierungen werden in einer Datenbank ggf. mit Anpassungsvorschlag abgelegt. Der Bediener beurteilt also das System in regelmäßigen Abständen und schult es somit. Das System kann so zunächst feststellen, ob sich das aktuelle Prozessergebnis noch im vorgegebenen Merkmalsraum befindet und ob das System eine Anpassung der Steuerparameter durchführen soll. Die gelernten Merkmale und Anpassungsvorschläge werden somit über die Zeit mehr und das System wird in der Bearbeitung immer besser. Ähnliche Merkmale und Anpassungsvorschläge können miteinander wieder verrechnet werden, um einer Merkmalsflut zu entgehen.

Im Folgenden soll noch das erfindungsgemäße High Dynamic Range (HDR)-Verfahren genauer erläutert werden. Bei diesem Verfahren wird ein bildgebender Sensor entweder mehrfach, also mindestens zwei Mal, pro Bild zu unterschiedlichen Zeitpunkten abgetastet oder mehrere Bilder, also zwei, drei oder mehr Bilder mit unterschiedlichen Belichtungszeiten oder mit mehreren Kameras erstellt und anschließend miteinander zu mindestens einem Bild verrechnet. Dieses Vorgehen ermöglicht eine Bild-, Bildsequenz- oder Videoaufnahme, die zugleich die umliegende Bearbeitungsfläche, das Prozessleuchten sowie die Dampfkapillare bzw. das Keyhole in einem Bild sichtbar machen. Die genannten Bereiche liegen in den Intensitätswerten bei einer Bildaufnahme von Laserbearbeitungsprozessen in einem weiten Bereich verteilt, der durch das genannte Verfahren in einem Bild sichtbar gemacht werden kann. Zur Anzeige auf einem Bildschirm oder Anzeigegerät im Zusammenhang mit einem Prozessüberwachungssystems bzw. einer Auswerte- oder Steuereinheit mit vergleichsweise niedriger Intensitätsauflösung wird ein so erstelltes Bild oder Bildsequenz über ein Grauwert- oder Tonemapping-Verfahren angepasst dargestellt.

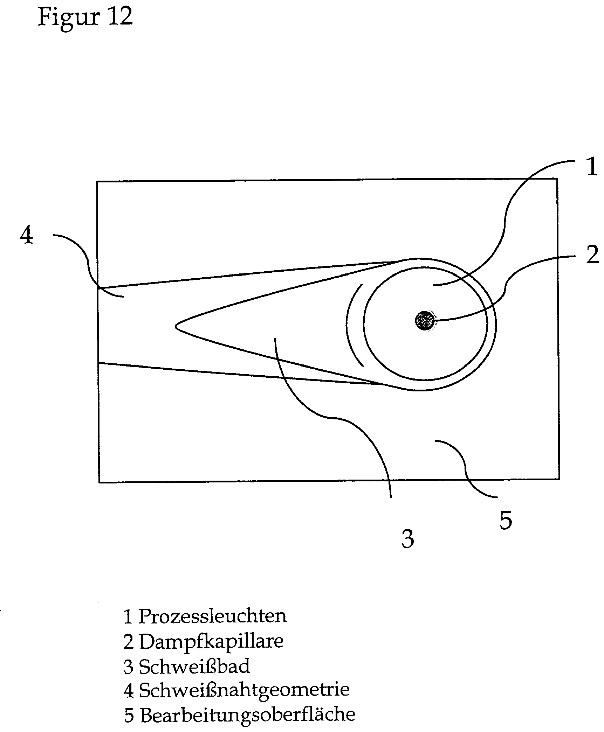

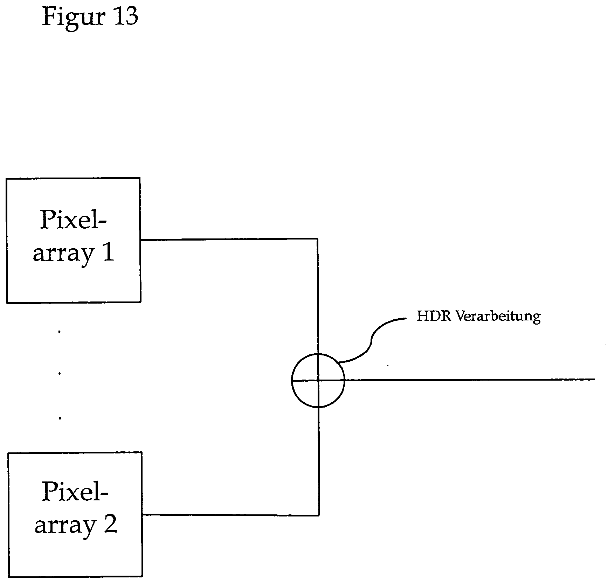

Wie in den Figuren 12 und 13 dargestellt, werden, um ein HDR-Verfahren oder ein Verfahren zur besseren Visualisierung von Bearbeitungsfläche, Prozessleuchten und Dampfkapillare durchzuführen, erfindungsgemäß mehrere Bilder oder Pixelarrays miteinander verrechnet.

Die unterschiedlichen Bilder können durch mehrfaches Abtasten eines bildgebenden Sensors entstehen oder durch simultane Bildaufnahme mit mehreren Kameras oder durch sequentielle Bildaufnahme mit einer Kamera, aber unterschiedlichen Belichtungszeiten, genannt Multi-Exposure-Technik. Die Verrechnung der einzelnen Bildaufnahmen kann auf verschiedene Verfahrensarten geschehen. Dazu gehört im einfachsten Fall das Aufaddieren und Mitteln der einzelnen Bildwerte von mehreren Bildern einer Bildsequenz aus mindestens zwei Bildaufnahmen. Für eine bessere Bildgewinnung können die Bildwerte oder Pixel aus einer Bildsequenz aus mindestens zwei Bildaufnahmen gewichtet gemittelt werden.

Als Gewichtungsverfahren kann entweder ein Entropie-Verfahren verwendet werden, zur Gewichtung nach dem Informationsgehalt, oder es kann eine gewichtete Mittelung unter Berücksichtigung der Kamera-Antwort-Funktion (engl. Camera Response Function), durchgeführt werden. Hierzu muss ein Rückschluss auf die reale oder realitätsnahe Strahlungsenergie pro Fläche erfolgen, der durch die folgende Funktion gegeben ist:

$$x_{ij} = \frac{I^{-1}(y_{ij})}{t_i}$$

Die Gewichtung für die einzelnen Strahlungsenergien lautet dann:

$$x_j = \frac{\sum_i w_{ij} * x_{ij}}{\sum_i w_{ij}}$$

Dabei ist i der Bildindex aus einer Bildsequenz mehrerer Bildaufnahmen, j die Pixel Position, $t_i$ die Belichtungszeit oder Abtastzeit der Bildaufnahme i, $y_{ij}$ der Intensitätswert des Pixels der Bildaufnahme i an der Position j, $I^{-1}()$ die inverse Camera Response Function, $x_j$ die geschätzte Strahlungsenergie pro Fläche an Pixelposition j, $w_{ij}$ die Gewichtungsfunktion des Zuverlässigkeitsmodells. Die Erfindung betrifft explizit den Einsatz dieser dargestellten HDR-Bildverrechnungsmethoden in Bearbeitungsverfahren wie Trennen oder Fügen von Materialien, insbesondere mit Laserbearbeitungsköpfen und/oder dem daran angeschlossenen erfindungsgemäßen Prozessüberwachungssystem.

Im Folgenden sollen ferner noch die eingesetzten Sensoren und Klassifizierungsverfahren genauer beschrieben werden.

Als Sensorik kann prinzipiell jeder Sensor verwendet werden, der eine Sensordatenausgabe ermöglicht. Konkret sind dies beispielsweise Mikrophone oder Körperschallaufnehmer, Kameras, Fotodioden, Taster, technische Auswerte- und Überwachungssignale sowie Aktorikparameter, wie beispielsweise die Laserleistung.

Merkmalsextrahierung und Dimensionsreduktion: Hierbei können alle Verfahren verwendet werden, die die Datenmenge reduzieren und den Informationsgehalt weitestgehend erhalten. Konkret sind hier die Hauptkomponentenanalyse (PCA), Independent Component Analyse (ICA), die Wavelet-Analyse, Fourier, Fast-Fourier und Laplace Analyse, Merkmals- und Objekterkennungsverfahren, Locally-Linear Embedding, Künstliche Neuronale Netze, Multidimensional Scaling u.v.m..

Die reduzierte Datenmenge kann als eine Punktwolke eines multi-dimensionalen Raumes interpretiert werden, die aus einem höher dimensionalen Raum gewonnen wurde. Durch die Reduzierung der Daten ist es möglich diese in endlicher Zeit mit zuvor aufgezeichneten und klassifizierten bzw. gelernten Datenmengen zu vergleichen. Bei dieser Klassifikation kann festgestellt werden, ob die neuen Sensordaten bereits aufgezeichneten Sensordaten ähneln und dieser Ähnlichkeit eine Wahrscheinlichkeit zugeordnet werden. Wird ein definierter Schwellwert für eine Ähnlichkeitswahrscheinlichkeit einer zuvor aufgezeichneten Datenmenge überschritten, so kann der darunter zuvor hinterlegte Lösungs- bzw. Steuerungs- bzw. Regelungsansatz verfolgt werden. Wird der Schwellwert für eine Ähnlichkeitswahrscheinlichkeit zu zuvor gelernten Datenmengen überschritten, so hat das System eine neue Situation.

Die Verhaltensweise für eine neue Situation kann entweder durch Erfragen bei einem menschlichen Bediener gelernt werden oder aus den bisherigen Daten und Lösungsstrategien nach dem Ähnlichkeitsprinzip ausprobiert werden. Hier kommen selbstlernende Algorithmen zum Einsatz, die nach einer Zielvorgabe anschließend nach einem Ausprobieren eines selbst erschlossenen Ansatzes überprüfen, ob ein Ziel erreicht wurde und den gewählten Lösungsansatz entsprechend bewerten. Für die Klassifikation, Ablegung von Erfahrungswerten und Lösungsstrategien sowie als selbstlernende Algorithmen können die folgenden Verfahren eingesetzt werden: Support Vector Machines, Support Vector Klassifikation, Fuzzy Logic, Informations Fuzzy Netze, Fuzzy K-Nearest Neighbor Klassifikator, K-Nearest Neighbor Klassifikator, Reinforcement Learning, Bayesian Networks und Bayesian Knowledge Datenbanken, Naive Bayes Klassifikatoren, Hidden Markov Ketten, Künstliche Neuronale Netze und Backpropagation, Regressions Analyse, genetische Programmierung oder Entscheidungsbäume.

Die nach der Klassifikation resultierende Lösungsstrategie, bzw. eine Regler- oder Aktoriksteuerung kann einfach ausgeführt werden, sie kann aber auch die Art der Datengewinnung steuern. Wird zum Beispiel kein Schwellwert für eine bekannte Datenmenge erreicht, so kann die Art der Datengewinnung verändert werden. Beispielsweise kann dies durch Anpassung einer Wavelet Analyse hin auf neue Frequenzbereiche oder durch Wechsel von PCA zu ICA erfolgen.

## High Dynamic Range-Verfahren (HDR Verfahren)

Ein HDR Verfahren kann zur Berechnung eines höheren Kontrastverhältnisses aus mehreren aufgenommenen Bildern oder Bildwertmatrizen und -vektoren mit unterschiedlichen Kontrastverhältnissen verwendet werden. Dazu können bei einer Bildaufnahme oder Beobachtung einer Szene mehrere Bilder mit unterschiedlichen Belichtungszeiten aufgenommen werden, aus denen anschließend ein Bild oder eine Bildfolge mit verbessertem Kontrastverhältnis errechnet werden kann. Um eine Bildfolge mit unterschiedlichen Kontrastverhältnissen zu erzeugen können mehrere Bilder mit unterschiedlicher Belichtungszeit aufgenommen werden, nach dem sogenannten Multi-Exposure Verfahren.

Es können aber auch während einer Belichtungszeit die Bildpunktwerte mehrfach abgetastet werden. Auf diese Weise wird eine Bildfolge mit unterschiedlichen Kontrastverhältnissen während einer Belichtungszeit erstellt. Hier kommt es dazu, dass die auf einem bildgebenden Sensor vorhandenen Ladungen, die die Bildpunkte repräsentieren, einmal abgerufen werden und danach nicht ein zweites Mal abgerufen werden können. Es existieren jedoch Techniken, wie das zerstörungsfreie Lesen auch Non-Distructive Readout (NDRO) genannt oder eine Multi-Slope bzw. Single Slope Auslesen oder Cooled Imager oder Charge-Injection Imaging (CIS) oder Thin-Film on CMOS (TFC) oder Aktive Pixel-Sensor (APS) oder Single-slope oder Correlated Double Sampling (CDS), die das mehrfache Abfragen einer Ladung, beispielsweise bei einem CMOS Chip, während einer einzigen Belichtungsdauer ermöglichen, ohne dass sich der abgefragte Ladungswert durch die Abtastung ändert. Diese Techniken können erfindungsgemäß zur Beobachtung eines Laserbearbeitungsprozesses verwendet werden, um damit ein Beobachtungs- oder Steuerungsverfahren zu realisieren, wobei es aufgrund des HDR-Verfahrens möglich ist, bei einem durchzuführenden Laserschweißvorgang gleichzeitig die Prozessemissionen, die Dampfkapillare, das Schweißbad, die Schweißnahtgeometrie, die Schweißnahtführung zu beobachten und aufzulösen, oder bei einem durchgeführten Laserschneidvorgang gleichzeitig die Schnittstelle, die Schnittkante, das Prozessleuchten sowie die Gradentstehung und die Gradgeometrie zu beobachten und aufzulösen. In beiden Fällen ist es möglich, gegebenenfalls eine auf ein zu bearbeitendes Werkstück projizierte Laserlinie zu beobachten (wie auch in Figur 12 gezeigt).

## Reinforcement Learning (RL)

Bestärkendes Lernen bzw. Verstärkendes Lernen oder auch Reinforcement Learning (RL) genannt bezeichnet ein Bereich des maschinellen Lernens. Es beschreibt Verfahren in denen Systeme oder Agenten, (Engl. agent), Handlungen (Engl. action) auf Umgebungen (Engl. environment) anwendet um eine Belohnung (Engl. reward) zu maximieren. RL findet dabei Abbildungsvorschriften oder Verfahrensweisen (Engl. policy) für einen oder mehrere Systemzustände oder Zustände (Engl. state) auf Systemaktionspläne oder Handlungen (Engl. actions). Die Verfahrensweisen von RL lassen sich erfindungsgemäß zur selbstverbessernden Steuerung und Beobachtung von Laserbearbeitungsprozessen einsetzen.

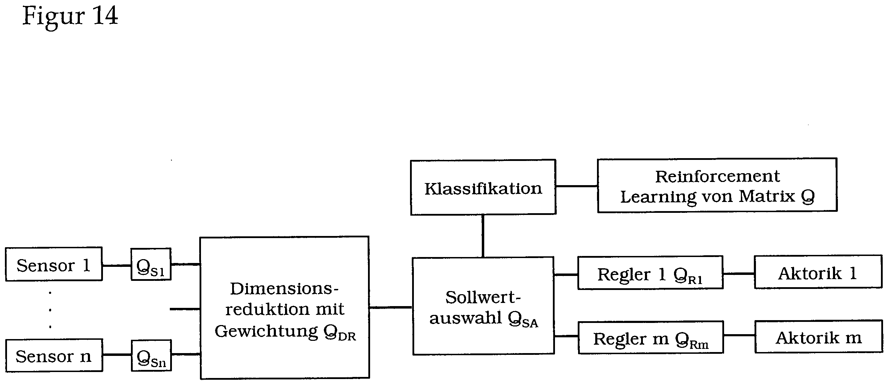

Fig. 14 zeigt eine mögliche Verfahrensweise, wie RL in einem Laserbearbeitungsprozess integriert werden kann. Die zu lernenden Werte werden durch die Matrix Q symbolisiert. Die Q Matrix besteht aus den Komponenten QS1. QSn, QSA, QDR, QR1, QRm, diese können eine oder mehrere Werte enthalten. Diese Komponenten werden mit einem Startwert initialisiert und nach einem RL Verfahren optimiert. Diese Optimierung findet dadurch statt, dass eine Handlung ausgeführt wird, diese durch eine Belohnungsfunktion bewertet wird und diese Bewertung die Werte der Q Matrix abändern. Vergleichbar mit einem Theater, wo ein Schauspieler von einem Kritiker bewertet wird, und der Schauspieler seine Handlungen anpasst. Wie zuvor beschrieben, kann in einer Referenzfahrt oder durch eine Einlernphase eine Punktwolke mit entsprechender Klassifizierung durch einen menschlichen Experten gewonnen werden. In dieser sind also die Charakteristiken oder Punktwolken oder Merkmale oder Fingerabdrücke oder Sensormesswerte hinterlegt, die das gewünschte Prozessergebnis darstellen. Dies kann durch eine Support Vector Machine oder einem anderen Klassifikationsverfahren realisiert werden. Diese kann eine Belohnungsfunktion darstellen, nach der das RL Verfahren arbeitet. Die Q Matrix wird also nach dieser vom Menschen eingelernten Belohnungsfunktion optimiert. Auf diese Weise können Gewichtungswerte oder Einstellparameter gelernt und optimiert werden, wie zum Beispiel die Gewichtung unterschiedlicher Sensoren untereinander (QS1, QSn), die Auswahl spezieller Merkmale die zur Steuerung oder Beobachtung herangezogen werden (QDA), die Auswahl von Sollwerten für diverse Regelverfahren (QDR), oder auch die Reglereinstellparameter wie zum Beispiel proportional, P-Anteil, integriert, I-Anteil, und differenziert, D-Anteil (QR1, QRm). Die Steuerungs-, Regelungs- oder Beobachtungseigenschaften eines Laserbearbeitungssystems können auf diese Weise über die Benutzungsdauer hinweg optimiert werden. Methoden die innerhalb eines Reinforcement Learning oder einem anderen ma-

schinellem Lernverfahren in der Lasermaterialverbeitung zur Anwendung kommen können, sind erfindungsgemäß die folgenden: Markov Entscheidungsprozess (Engl. Markov Decision Process (MDP), Q Lernen (Engl. Q Learning) Adaptive Heuristic Critic (AHC), State-Action-Reward-State-Action (SARSA) Algorithmus, Self-Organizing Map (SOM), Adaptive Resonance Theory (ART), Multivariate analysis (MVA), Expectation-Maximization (EM) Algorithmus, Radial Basis Function Network, Time Series Prediction, Automatic target recognition (ATR), Radial Basis Function (RBF) sowie ähnliche Verfahren.

**Diskriminanzanalyse und Regelungsverfahren**

Eine Diskriminanzanlayse (DA) bzw. lineare Diskriminanzanalyse oder auf Englisch Linear Discriminant Analysis (LDA) wie auch Fisher's linear discriminant genannt ist ein statistisches Analyseverfahren, welches ein ähnliches Funktionsprinzip aufweist wie die bereits beschriebene Hauptkomponentenanalyse. Im Gegensatz zur Hauptkomponentenanalyse beachtet die DA auch die Klassenzugehörigkeit einer Klassifikation. Auch DA kann alternativ zur Dimensionsreduktion in dem erfindungsgemäßen Verfahren eingesetzt werden, stellt aber gleichzeitig eine Kombination aus Dimensionsreduktion und Klassifikationsverfahren dar.

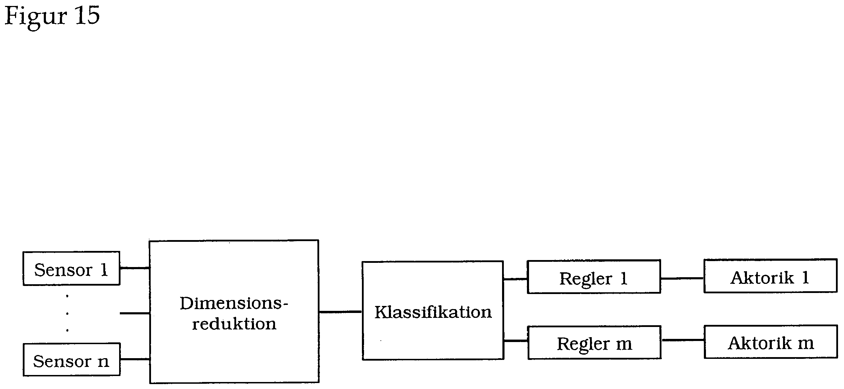

Es können damit, wie in Figur 15 dargestellt, Sensordaten erfasst werden, in Dimension reduziert werden und mit einem wie bereits beschriebenen Verfahren mit vorher gelernten Daten klassifiziert werden. Das Klassifikationsergebnis kann dann als Basis für eine Istwert Berechnung für einen oder mehrere Regler mit gelernten Sollwerten zur Steuerung von einem oder mehreren Aktoren oder Steuerparameter verwendet werden. Die DA ist mit anderen Dimensionsreduktionsverfahren erfindungsgemäß in der Lasermaterialbearbeitung kombinierbar, so kann zum Beispiel zunächst eine Hauptkomponenten Analyse durchgeführt werden und daraufhin eine DA durchgeführt werden. Dies gilt auch für die anderen bereits beschriebenen Dimensionsreduktionsverfahren, die einen Sensordateneingangsvektor der Dimension Y auf eine Dimension X mit X < Y reduzieren. Die Kombinationen können sich für die jeweiligen Sensoren unterscheiden. So ist die bereits erwähnte Independent Component Analysis, die Merkmale nach statistischer Unabhängigkeit extrahiert, besonders für akustische Sensoren geeignet und die Hauptkomponentenanalyse für bildgebende Sensoren. Weitere Dimensionsreduktionsverfahren können erfindungsgemäß in einem beschriebenen Lasermaterialverarbeitungssystem zum Einsatz kommen: Betriebssystemkern Haupkomponentenanalyse (Engl. Kernel Principle Component Analysis), locally linear embedding (LLE), Hessian LLE, Laplace Eigenname und -karte (Engl. Laplacian Eigenmaps), Local Tangent Space Alignment (LTSA), Semidefinite Embedding (SDE), Maximum Variance Unfolding (MVU), Curvilinear Component Analysis (CCA), Data-driven High-dimensional Scaling (DD-HDS), Autoencoders, als Spezialvariante eines Feed-Forward Künstlichen Neuronalen Netz, Boltzmann Machines sowie alle Verfahren ähnlichem Prinzips.

Eine Hauptkomponentenanalyse oder andere Dimensionsreduktionsverfahren oder eine Merkmalsextraktion oder ein HDR Verfahren können erfindungsgemäß zur besonders schnellen Datenverarbeitung auch auf einem in einer Bilderfassungseinheit integrierten Cellular Neural Network (CNN) in einem Laserbearbeitungssystem ausgeführt werden. CNN ist ein paralleles Berechnungsverfahren ähnlich zu einem Künstlichem Neuronalen Netzwerk.

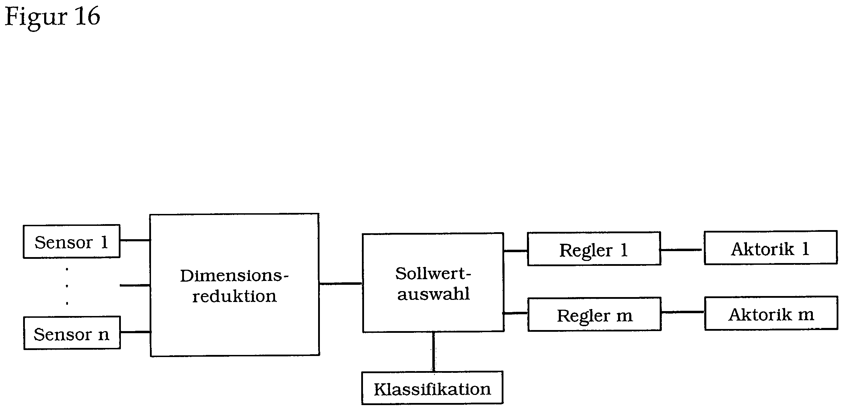

Ferner kann, wie in Figur 16 gezeigt, erfindungsgemäß zur schnelleren Datenverarbeitung auch direkt mit Sollwerten aus einer Dimensionsreduktion ein Laserbearbeitungsprozess geregelt werden, eine Klassifikation kann dann dazu dienen die besten Sollwerte mit einer Optimierung eines Signal zu Rauschabstandes bestimmt werden. Auf diese Weise können sehr hohe Regelungszyklen realisiert werden, bei gleichzeitig hoher Adaptivität durch Berücksichtigung der gelernten Klassifikationsergebnisse.

**Patentansprüche**

1.   Verfahren zur Überwachung eines an einem Werkstück durchzuführenden Laserbearbeitungsvorgangs, mit den folgenden Schritten:

      - Erfassen von zumindest zwei aktuellen Messwerten mittels zumindest einem Sensor, welcher den Laserbearbeitungsvorgang überwacht,
      - Ermitteln von zumindest zwei aktuellen Kennwerten aus den zumindest zwei aktuellen Messwerten, wobei die zumindest zwei aktuellen Kennwerte gemeinsam einen aktuellen Fingerabdruck in einem Kennwertraum darstellen,
      - Bereitstellen einer vorbestimmten Punktmenge in dem Kennwertraum, die mittels eines Lernprozesses festgelegt wird, und
      - Klassifizieren des Laserbearbeitungsvorgangs durch Erfassen der Lage des aktuellen Fingerabdrucks relativ zur vorbestimmten Punktmenge im Kennwertraum,

      wobei der zumindest eine Sensor zumindest eine Kameraeinheit umfasst, die Kamerabilder mit unterschiedlichen Belichtungszeiten aufnimmt und diese über ein High Dynamic Range (HDR)-Verfahren miteinander verrechnet, um als aktuelle Messwerte Bilder mit hohem Kontrastverhältnis bereitzustellen, und wobei das Ermitteln der aktuellen Kennwerte aus den aktuellen Messwerten ein Verfahren zur Datenreduktion oder Dimensionsreduktion wie eine Hauptkomponentenanalyse umfasst.

**2.** Verfahren nach Anspruch 1, **dadurch gekennzeichnet, dass** das Ermitteln der aktuellen Kennwerte aus den aktuellen Messwerten eine Hauptkomponentenanalyse oder eine lineare Diskriminanzanalyse umfasst, und das Klassifizieren Support Vector Machines oder eine Support Vector-Klassifizierung umfasst.

**3.** Verfahren nach Anspruch 1 oder 2, **dadurch gekennzeichnet, dass** das HDR-Verfahren dazu ausgebildet ist, die Kamerabilder so zu verrechnen, dass bei einem durchgeführten Laserbearbeitungsvorgang gleichzeitig die umliegende Bearbeitungsfläche eines zu bearbeitenden Werkstücks sowie das Prozessleuchten in einem Bild sichtbar gemacht werden können.

**4.** Verfahren nach einem der vorstehenden Ansprüche, **dadurch gekennzeichnet, dass** die Kamerabilder durch mehrfaches Abtasten eines bildgebenden Sensors der Kameraeinheit, durch simultane Bildaufnahme mit mehreren Kameras oder durch sequentielle Bildaufnahme mit einer Kamera mit unterschiedlichen Belichtungszeiten aufgenommen werden.

**5.** Verfahren nach einem der vorstehenden Ansprüche, **dadurch gekennzeichnet, dass** die Verrechnung der aufgenommenen Kamerabilder durch die zumindest eine Kameraeinheit mittels eines Gewichtungsverfahrens anhand eines Entropie-Verfahrens oder anhand einer Kamera-Antwort-Funktion durchgeführt wird.

**6.** Verfahren nach einem der vorstehenden Ansprüche, **dadurch gekennzeichnet, dass** die zu verrechnenden Kamerabilder mittels einer vorlaufenden Kamera vor dem Laserbearbeitungsprozess, einer Kamera, welche die Laserbearbeitungszone abbildet, und/oder einer nachlaufenden Kamera nach dem Laserbearbeitungsprozess aufgenommen werden.

**7.** Verfahren nach einem der vorstehenden Ansprüche, mit dem Schritt des Regelns zumindest eines Prozessparameters eines zugehörigen Aktors derart, dass, wenn der aktuelle Fingerabdruck die vorbestimmten Punktmenge des Kennwertraums verlässt, der zumindest eine Aktor so aktiviert wird, dass die Änderung des zugehörigen Prozessparameters einem Gradienten im Kennwertraum entspricht, der sich ausgehend von dem Fingerabdruck in Richtung der vorbestimmten Punktmenge im Kennwertraum erstreckt.

**8.** Verfahren nach einem der vorstehenden Ansprüche, **dadurch gekennzeichnet, dass** das Ermitteln eines aktuellen Kennwerts aus zumindest einem aktuellen Messwert mit Hilfe eines neuronalen Netzes erfolgt.

**9.** Verfahren nach einem der vorstehenden Ansprüche, **dadurch gekennzeichnet, dass** das Gradientenfeld des Kennwertraums in Abhängigkeit der Prozessparameter in unterschiedlichen Bereichen an den Stellen im Kennwertraum ermittelt wird, welche hinsichtlich des Gradienten repräsentativ für den jeweiligen Bereich sind.

**10.** Verfahren nach Anspruch 9, **dadurch gekennzeichnet, dass** der Gradient des Kennwertraums in Abhängigkeit eines Prozessparameters durch eine Variation des Prozessparameters an einer vorbestimmten Stelle des Kennwertraums ermittelt wird.

**11.** Verfahren nach Anspruch 10, **dadurch gekennzeichnet, dass** zur Ermittlung des Gradienten des Kennwertraums eine Referenzfahrt mit einem variierenden Prozessparameter durchgeführt wird, wobei im Laserbearbeitungsvorgang eine obere und eine untere Definitionsgrenze auftritt und überschritten wird.

**12.** Verfahren nach einem der vorstehenden Ansprüche, **dadurch gekennzeichnet, dass** der zumindest eine Sensor aus einer Gruppe ausgewählt ist, welche zumindest eine Fotodiode mit Filtern für bestimmte Wellenlängen, Körper- und Luftschallaufnehmer, und zumindest eine Kameraeinheit mit einer entsprechenden Oberflächenbeleuchtung umfasst.

**13.** Verfahren nach einem der vorstehenden Ansprüche, **dadurch gekennzeichnet, dass** der zumindest eine Aktor aus einer Gruppe ausgewählt ist, welche eine Steuerung der Laserleistung, eine Geschwindigkeitssteuerung des Bearbeitungskopfes relativ zum Werkstück, eine Steuerung der Fokuslage des Bearbeitungslaserstrahls, eine Steuerung des Abstands des Bearbeitungskopfes zum Werkstück, eine Steuerung des Lateralversatzes, und eine Steuerung der Prozessgaszufuhr umfasst.

**14.** Vorrichtung zur Durchführung eines Verfahrens zur Überwachung eines an einem Werkstück durchzuführenden Laserbearbeitungsvorgangs gemäß einem der vorstehenden Ansprüche, mit:

- zumindest einem Sensor zur Überwachung des Laserbearbeitungsvorgang, welcher zur Erfassung von zumindest zwei aktuellen Messwerten geeignet ist, wobei der zumindest eine Sensor zumindest eine Kameraeinheit umfasst, die Kamerabilder mit unterschiedlichen Belichtungszeiten aufnimmt und diese über ein High Dynamic Range (HDR)-Verfahren miteinander verrechnet, um als aktuelle Messwerte Bilder mit hohem Kontrastverhältnis bereitzustellen,

- einer Datenverarbeitungseinheit zum Ermitteln von zumindest zwei Kennwerten aus den zumindest zwei aktuellen Messwerten zum Erstellen eines aktuellen Fingerabdrucks in einem Kennwertraum, wobei das Ermitteln der aktuellen Kennwerte aus den aktuellen Messwerten ein Verfahren zur Datenreduktion oder Dimensionsreduktion wie eine Hauptkomponentenanalyse umfasst,
- einer Speichereinheit zum Speichern der vorbestimmten Punktmenge innerhalb des Kennwertraums, und
- einer Klassifizierungseinheit zur Bewertung des Laserbearbeitungsvorgangs durch Erfassen der Lage des aktuellen Fingerabdrucks relativ zur vorbestimmten Punktmenge im Kennwertraum.

15. Vorrichtung nach Anspruch 14, ferner mit einer Regelungseinheit zum Regeln zumindest eines Prozessparameters eines zugehörigen Aktors derart, dass bei einem Verlassen des aktuellen Fingerabdrucks aus der Punktmenge des Kennwertraums der zumindest eine Aktor so aktiviert wird, dass die Änderung des zugehörigen Prozessparameters einem Gradienten im Kennwertraum entspricht, der sich ausgehend von dem Fingerabdruck in Richtung der vorbestimmten Punktmenge erstreckt.

16. Vorrichtung nach Anspruch 14 oder 15, **dadurch gekennzeichnet, dass** der zumindest eine Aktor aus einer Gruppe ausgewählt ist, welche eine Steuerung der Laserleistung, eine Geschwindigkeitssteuerung des Bearbeitungskopfes relativ zum Werkstück, eine Steuerung der Fokuslage des Bearbeitungslaserstrahls, eine Steuerung des Abstands des Bearbeitungskopfes zum Werkstück, eine Steuerung des Lateralversatzes, und eine Steuerung der Prozessgaszufuhr umfasst.

17. Vorrichtung nach einem der Ansprüche 14 bis 16, **dadurch gekennzeichnet, dass** der zumindest eine Sensor aus einer Gruppe ausgewählt ist, welche zumindest eine Fotodiode mit Filtern für bestimmte Wellenlängen, Körper- und Luftschallaufnehmer, und zumindest eine Kameraeinheit mit einer entsprechenden Oberflächenbeleuchtung umfasst.

18. Laserbearbeitungskopf zur Bearbeitung eines Werkstücks mittels eines Laserstrahls, mit einer Vorrichtung nach einem der Ansprüche 14 bis 17.

**Claims**

1. A method for monitoring a laser processing operation to be performed on a workpiece, having the following steps:

- detecting at least two current measured values by means of at least one sensor that monitors the laser processing operation,
- determining at least two current features from the at least two current measured values, the at least two current features jointly representing a current fingerprint in a feature space,
- providing a predetermined point set in the feature space, wherein the predetermined point set is defined inside the feature space by means of a learning process, and
- classifying the laser processing operation by detecting the position of the current fingerprint relative to the predetermined point set in the feature space, the at least one sensor comprising at least one camera unit that records camera images with different exposure times and processes said camera images with each other using a high dynamic range (HDR) method in order to provide images with high contrast ratio as current measured values, and wherein the determination of the current features from the current measured values comprises a method for data reduction or dimension reduction such as principal component analysis.

2. The method as claimed in claim 1, **characterized in that** the determination of the current features from the current measured values comprises a principal component analysis or a linear discriminant analysis, and the classifying comprises support vector machines or a support vector classification.

3. The method as claimed in claim 1 or 2, **characterized in that** the HDR method is designed to process the camera images so that, in the case of performance of a laser processing operation, the surrounding processing surface of a workpiece to be machined and the process emission can be simultaneously visualized in one image.

4. The method as claimed in one of the preceding claims, **characterized in that** the camera images are recorded by multiple scanning of an imaging sensor of the camera unit, by simultaneous imaging with a plurality of cameras, or by sequential imaging with one camera with different exposure times.

5. The method as claimed in one of the preceding claims, **characterized in that** the processing of the recorded camera images by the at least one camera unit is performed by means of a weighting method with the aid of an entropy method or with the aid of a camera response function.

6. The method as claimed in one of the preceding claims, **characterized in that** the camera images to be processed are recorded by means of a camera running ahead before the laser processing operation, a camera imaging the laser processing zone, and/or a camera running behind after the laser processing operation.

7. The method as claimed in one of the preceding claims, having the step of closed-loop controlling at least one process parameter of an associated actuator in such a way that, when the current fingerprint leaves the predetermined point set of the feature space, the at least one actuator is activated so that the change in the associated process parameter corresponds to a gradient in the feature space that, starting from the fingerprint, extends in the direction of the predetermined point set in the feature space.

8. The method as claimed in one of preceding claims, **characterized in that** the determination of a current feature from at least one current measured value is performed with the aid of an artificial neural network.

9. The method as claimed in one of the preceding claims, **characterized in that** the gradient field of the feature space is determined in dependency of the process parameters in different regions at the points in the feature space that are representative of the respective region with regard to the gradient.

10. The method as claimed in claim 9, **characterized in that** the gradient of the feature space is determined in dependency of a process parameter by varying the process parameter at a predetermined point of the feature space.

11. The method as claimed in claim 10, **characterized in that** the determination of the gradient of the feature space comprises performing of a reference run in which at least one process parameter is varied, wherein in the laser processing operation an upper and a lower specification boundary occurs and is overshot.

12. The method as claimed in one of the preceding claims, **characterized in that** the at least one sensor is selected from a group that comprises at least one photodiode with filters for specific wavelengths, solid-borne and air-borne acoustic sensors, and at least one camera unit with an appropriate surface illumination.

13. The method as claimed in one of the preceding claims, **characterized in that** the at least one actuator is selected from a group that comprises a controller of the laser power, a processing velocity controller of the processing head relative to the workpiece, a controller of the focal point of the processing laser beam, a controller of the distance of the processing head from the workpiece, a controller of the lateral offset, and a controller of process gas supply.

14. A device for performing a method for monitoring a laser processing operation to be performed on a workpiece in accordance with the preceding claims, comprising:

- at least one sensor for monitoring the laser processing operation that is suitable for detecting at least two current measured values, wherein the at least one sensor comprises at least one camera unit that records camera images with different exposure times and processes said camera images with each other using a high dynamic range (HDR) method in order to provide images with high contrast ratio as current measured values,
- a data processing unit for determining at least two features from the at least two current measured values in order to create a current fingerprint in a feature space, wherein the determination of the at least two current features from the at least two current measured values comprises a method for data reduction or dimension reduction such as principal component analysis,
- a memory unit for storing a predetermined point set inside the feature space, and
- a classification unit for evaluating the laser processing operation by detecting the position of the current fingerprint relative to the predetermined point set in the feature space.

15. The device as claimed in claim 14, further having a control unit for controlling at least one process parameter of an associated actuator in such a way that, when the current fingerprint leaves the point set of the feature space, the at least one actuator is activated so that the change in the associated process parameter corresponds to a gradient in the feature space that, starting from the fingerprint, extends in the direction of the predetermined point set.

16. The device as claimed in claim 14 or 15, **characterized in that** the at least one actuator is selected from a group that comprises a controller of the laser power, a processing velocity controller of the processing head relative to the workpiece, a controller of the focal point of the processing laser beam, a controller of the distance of the processing head from the workpiece, a controller of the lateral offset, and a controller for process gas supply.

17. The device as claimed in one of claims 14 to 16, **characterized in that** the at least one sensor is selected from a group that comprises at least one photodiode with filters for specific wavelengths, solid-borne and air-borne acoustic sensors, and at least one camera unit with an appropriate surface illumination.

18. A laser processing head for processing a workpiece by means of a laser beam, having a device as claimed in one of claims 14 to 17.

**Revendications**

1. Procédé destiné à superviser un processus d'usinage au laser qui doit être réalisé sur une pièce d'oeuvre, comprenant les étapes suivantes :

   - de la détection d'au moins deux valeurs de mesure actuelles à l'aide d'au moins un capteur, lequel supervise le processus d'usinage au laser,
   - de la détermination d'au moins deux valeurs caractéristiques actuelles à partir d'au moins deux valeurs de mesure actuelles, les au moins deux valeurs caractéristiques actuelles représentant en commun une empreinte digitale actuelle dans une étendue de valeurs caractéristiques,
   - de la mise à disposition d'une quantité prédéfinie de points dans l'étendue de valeurs caractéristiques, qui est fixée à l'aide d'un processus d'apprentissage et
   - de la classification du processus d'usinage au laser par détection de la position de l'empreinte digitale actuelle par rapport à la quantité prédéfinie de points dans l'étendue de valeurs caractéristiques,
   l'au moins un capteur comprenant au moins une unité de caméra qui enregistre des images de caméra avec différents temps de prise et les compense mutuellement via un procédé (HDR) High Dynamic Range (plage dynamique élevée) pour mettre à disposition en tant que valeurs de mesure actuelles un procédé de réduction des données ou de réduction des dimensions, comme une analyse des principaux composants.

2. Procédé selon la revendication 1, **caractérisé en ce que** la détermination des valeurs caractéristiques actuelles à partir des valeurs de mesure actuelles comprend une analyse des principaux composants ou une analyse linéaire des discriminations et **en ce que** la classification comprend des Support Vector Machines (machines vectorielles de support) ou une classification vectorielle de support.

3. Procédé selon la revendication 1 ou la revendication 2, **caractérisé en ce que** le procédé HDR est conçu pour compenser les images de la caméra de telle sorte que lorsqu'un processus d'usinage au laser a été réalisé, la surface d'usinage environnante d'une pièce d'oeuvre à usiner, ainsi que l'éclairage du processus peuvent être rendus visibles simultanément dans une image.

4. Procédé selon l'une quelconque des revendications précédentes, **caractérisé en ce que** les images de la caméra sont enregistrées par balayage multiple d'un capteur d'imagerie de l'unité de caméra, par enregistrement simultané d'images avec plusieurs caméras ou par enregistrement séquentiel d'images avec une caméra à différents temps de prise.

5. Procédé selon l'une quelconque des revendications précédentes, **caractérisé en ce que** la compensation des images enregistrées par la caméra est réalisée par l'au moins une unité de caméra au moyen d'un procédé de pondération,, à l'aide d'un procédé d'entropie ou à l'aide d'une fonction de réponse de la caméra.

6. Procédé selon l'une quelconque des revendications précédentes, **caractérisé en ce que** les images de la caméra qui doivent être compensées sont enregistrées au moyen d'une caméra avancée en amont du processus d'usinage au laser, d'une caméra qui reproduit la zone d'usinage au laser et/ou d'une caméra retardée, en aval du processus d'usinage au laser.

7. Processus selon l'une quelconque des revendications précédentes, avec l'étape du réglage d'au moins un paramètre du processus d'un actionneur associé, de telle sorte que lorsque l'empreinte digitale actuelle abandonne la quantité prédéfinie de points de l'étendue de valeurs caractéristiques, l'au moins un actionneur est activé de telle sorte que la modification du paramètre de processus associé corresponde à un gradient dans l'étendue de valeurs caractéristiques, qui à partir de l'empreinte digitale s'étend en direction de la quantité prédéfinie de points dans l'étendue de valeurs caractéristiques.

8. Procédé selon l'une quelconque des revendications précédentes, **caractérisé en ce que** la détermination d'une valeur caractéristique actuelle à partir d'au moins une valeur de mesure actuelle s'effectue à l'aide d'un réseau neuronal.

9. Procédé selon l'une quelconque des revendications précédentes, **caractérisé en ce que** le champ de gradient de l'étendue de valeurs caractéristiques est déterminé en fonction des paramètres du processus dans différents secteurs, aux endroits dans l'étendue de valeurs caractéristiques qui sont représentatifs pour le secteur concerné.

10. Procédé selon la revendication 9, **caractérisé en ce que** le gradient de l'étendue de valeurs caractéristiques est déterminé en fonction d'un paramètre du processus par une variation du paramètre de processus en un endroit prédéfini de l'étendue de valeurs caractéristiques.

11. Procédé selon la revendication 10, **caractérisé en ce que** pour la détermination du gradient de l'étendue de valeurs caractéristiques, il est procédé à une prise de référence avec un paramètre de processus variable, sachant que lors du processus d'usinage au laser, il se produit une limite de définition supérieure et inférieure qui est dépassée.

12. Procédé selon l'une quelconque des revendications précédentes, **caractérisé en ce que** l'au moins un capteur est choisi dans un groupe lequel comprend au moins une photodiode avec des filtres pour certaines longueurs d'ondes, des capteurs de bruits de structure, des capteurs de bruits aériens et au moins une unité de caméra avec un éclairage superficiel correspondant.

13. Procédé selon l'une quelconque des revendications précédentes, **caractérisé en ce que** l'au moins un actionneur est choisi dans un groupe qui comprend un système de commande de la puissance du laser, un système de commande de la vitesse de la tête d'usinage par rapport à la pièce d'oeuvre, un système de commande de la focale du rayon laser d'usinage, un système de commande de l'écart entre la tête d'usinage et la pièce d'oeuvre, un système de commande du déport latéral et un système de commande de l'évacuation du gaz de processus.

14. Dispositif destiné à réaliser un procédé de supervision d'un processus d'usinage au laser qui doit être réalisé sur une pièce d'oeuvre selon l'une quelconque des revendications précédentes, avec :

   - au moins un capteur pour la supervision du processus d'usinage au laser, lequel est adapté pour détecter au moins deux valeurs de mesure actuelles, l'au moins un capteur comprenant au moins une unité de caméra, qui enregistre les images de la caméra à différents temps de prise et les compense mutuellement par l'intermédiaire d'un procédé (HDR) High Dynamic Range (plage dynamique élevée), pour mettre à disposition en tant que valeurs de mesure actuelles des images à taux de contraste élevé,
   - une unité de traitement des données pour déterminer au moins deux valeurs caractéristiques à partir des au moins deux valeurs de mesure actuelles, pour établir une empreinte digitale actuelle dans une étendue de valeurs caractéristiques, la détermination des valeurs caractéristiques actuelles à partir des valeurs de mesure actuelles comprenant un procédé de réduction des données ou de réduction des dimensions, comme une analyse des principaux composants,
   - une unité de mémoire destinée à mémoriser une quantité prédéfinie de points dans l'étendue de valeurs caractéristiques et
   - une unité de classification destinée à évaluer le processus d'usinage au laser par détection de la position de l'empreinte digitale actuelle par rapport à des quantités prédéfinies de points dans l'étendue de valeurs caractéristiques.

15. Dispositif selon la revendication 14, par ailleurs avec une unité de régulation destinée à régler au moins un paramètre du processus d'un actionneur associé, de telle sorte que lors d'un abandon de l'empreinte digitale actuelle à partir de la quantité de points de l'étendue de valeurs caractéristiques, l'au moins un actionneur est activé de telle sorte que la modification du paramètre de processus associée corresponde à un gradient dans l'étendue de valeurs caractéristiques qui s'étend à partir de l'empreinte digitale, en direction de la quantité prédéfinie de points.

16. Dispositif selon la revendication 14 ou la revendication 15, **caractérisé en ce que** l'au moins un actionneur est choisi dans un groupe qui comprend un système de commande de la puissance du laser, un système de commande de la vitesse de la tête d'usinage par rapport à la pièce d'oeuvre, un système de commande de la focale du rayon laser d'usinage, un système de commande de l'écart entre la tête d'usinage et la pièce d'oeuvre, un système de commande du déport latéral et un système de commande de l'évacuation du gaz de processus.

17. Dispositif selon l'une quelconque des revendications 14 à 16, **caractérisé en ce que** l'au moins un capteur est choisi dans un groupe lequel comprend au moins une photodiode avec des filtres pour certaines longueurs d'ondes, des capteurs de bruits de structure, des capteurs de bruits aériens et au moins une unité de caméra avec un éclairage superficiel correspondant.

18. Tête d'usinage au laser destiné à usiner une pièce d'oeuvre à l'aide d'un rayon laser, avec un dispositif selon l'une quelconque des revendications 14 à 17.

Figur 1

Sensorik → Prozesserfassung → Prozesssteuerung → Aktorik

Kognitive Fähigkeiten:

Erlernen eines neuen Prozesses

Erkennen, Verbessern und Vermeiden von Bearbeitungsfehlern

# Figur 2

| | | |
|---|---|---|
| Köperschallsensor 1 | → Vorverarbeitung | → a/d |
| Köperschallsensor 2 | → Vorverarbeitung | → a/d |
| Luftschallsensor 1 | → Vorverarbeitung | → a/d |
| Luftschallsensor 2 | → Vorverarbeitung | → a/d |
| Fotodiode 1 | → Vorverarbeitung | → a/d |
| Fotodiode 2 | → Vorverarbeitung | → a/d |
| Fotodiode 3 | → Vorverarbeitung | → a/d |
| In-Prozesskamera | → Vorverarbeitung | → a/d |
| Post-Prozesskamera | → Vorverarbeitung | → a/d |
| Pre-Prozesskamera | → Vorverarbeitung | → a/d |
| Werkstückbeleuchtung | | |

EP 2 365 890 B1

Figur 3

In-Prozess Kamera

Strahlteiler

Beleuchtungseinheit

Fokussieroptik

Laserlichtquelle

Mikrofon

Fokussieroptik

Körperschallsensor

Körperschallsensor

Pre-Prozesskamera

Post-Prozesskamera

Werkstück

Richtmikrofon

EP 2 365 890 B1

## Figur 4A

Laserstrahlleistungssteuerung

Fokussieroptik

Abstandssteuerung

Werkstück

Geschwindigkeitssteuerung

Fokuslagensteuerung

## Figur 4B

Laserstrahlleistungssteuerung

Prozessgassteuerung

Fokussieroptik

Abstandssteuerung

Düse

Werkstück

Geschwindigkeitssteuerung

Fokuslagensteuerung

## Figur 5A

```
┌─────────────────┐        ┌─────────────────────┐        ┌──────────────────────────┐
│                 │        │   Datenreduktion    │        │ Merkmalsvektor /-matrix  │
│   Sensordaten   │ ─────► ├─────────────────────┤ ─────► │    zur Klassifizierung   │
│                 │        │  PCA o SVM o LLE o  │        │                          │
│                 │        │        MDS          │        │                          │
└─────────────────┘        └─────────────────────┘        └──────────────────────────┘
```

## Figur 5B

```
┌─────────────────┐        ┌─────────────────┐        ┌──────────────────────────┐
│   Sensordaten   │ ─────► │  Training KNN   │ ─────► │   Klassifizierungsnetz   │
└─────────────────┘        └─────────────────┘        └──────────────────────────┘
```

Figur 6A

Sensoren → Datenreduktion wie bei Lernvorgang → Vergleich des aktuellen Sensorergebnisses mit erlernten Merkmalen → Klassifizierung Sollbereich ja/nein Steuerparameter +/-

Erlernte Merkmalsvektoren → Vergleich des aktuellen Sensorergebnisses mit erlernten Merkmalen

Figur 6B

Sensoren → trainiertes KNN → Klassifizierung Sollbereich ja/nein Steuerparameter +/-

## Figur 7

Werkstück

← Grat

Merkmalsmatrix bzw. Fingerabdruck „Grat"

Anzeige, wann der Fingerabdruck „Grat" aufgetreten ist

EP 2 365 890 B1

Figur 8

Sensordaten $\longrightarrow$ | Dimensionsreduktion | $\longrightarrow$ | Support Vektor Klassifikation |

Datenbank der
Merkmalsabbildungsvorschriften

Klassifizierungsdaten

EP 2 365 890 B1

EP 2 365 890 B1

Figur 9

Sensor 1 — [TP] — PCA nPC — $\dfrac{1}{\max(|d|)}$ — - mean

Sensor n — TP — PCA nPC — $\dfrac{1}{\max(|d|)}$ — - mean

Merkmalsaus-prägungsdaten

Figur 10

Datenbank der
Merkmalsabbildungsvorschriften

Klassifizierungsdaten

Sensordaten → Dimensionsreduktion → Support Vektor Klassifikation → Soll ja/nein
Tendenz +/-

EP 2 365 890 B1

# Figur 11

Sensordaten der Referenzfahrt 2 → **Dimensionsreduktion** → **Identifizierung der Merkmale von Referenzfahrt 1 in Referenzfahrt 2** → **Schätzung der neuen Steuerparameter**

Merkmalsabbildungsvorschriften

Sensordaten der Referenzfahrt 1 → **Dimensionsreduktion**

EP 2 365 890 B1

## Figur 12

1 Prozessleuchten
2 Dampfkapillare
3 Schweißbad
4 Schweißnahtgeometrie
5 Bearbeitungsoberfläche

Figur 13

Pixelarray 1

Pixelarray 2

HDR Verarbeitung

Figur 14

Figur 15

EP 2 365 890 B1

```
┌──────────┐   ┌──────────────┐     ┌──────────────┐   ┌────────────┐   ┌──────────────┐
│ Sensor 1 │──┤              │     │              ├───┤  Regler 1  ├───┤  Aktorik 1   │
└──────────┘   │ Dimensions-  │     │Klassifikation│   └────────────┘   └──────────────┘
      .        │  reduktion   ├─────┤              │   ┌────────────┐   ┌──────────────┐
      .    ────┤              │     │              ├───┤  Regler m  ├───┤  Aktorik m   │
┌──────────┐   │              │     └──────────────┘   └────────────┘   └──────────────┘
│ Sensor n │──┤              │
└──────────┘   └──────────────┘
```

Figur 16

| Sensor 1 | | | | | | |
| · | Dimensions-reduktion | | Sollwert-auswahl | Regler 1 | Aktorik 1 |
| Sensor n | | | | Regler m | Aktorik m |

Klassifikation

**IN DER BESCHREIBUNG AUFGEFÜHRTE DOKUMENTE**

**In der Beschreibung aufgeführte Patentdokumente**

- EP 1415755 A2
- US 5517420 A
- DE 10103255 A1
- WO 0139919 A2

**In der Beschreibung aufgeführte Nicht-Patentliteratur**

- **FARSON D F et al.** Intelligent Laser Welding Control. *Proceedings of Laser Materials Processing Conference ICALEO. Proceedings of International Congress on the Applications of Lasers and Electro-Optics,* 01. Januar 1991, vol. 1722, 104-112